Europäisches Patentamt

European Patent Office

Office européen des brevets

(19)

(11) EP 0 781 679 B1

(12) **FASCICULE DE BREVET EUROPEEN**

(45) Date de publication et mention
de la délivrance du brevet:
**05.03.2003 Bulletin 2003/10**

(51) Int Cl.⁷: **B60K 31/00**, G05D 1/00

(21) Numéro de dépôt: **96402697.5**

(22) Date de dépôt: **11.12.1996**

(54) **Système de commande pour la sécurisation d'un véhicule rapide, notamment guidé par un opérateur embarqué ou non dans ledit véhicule, installation pour le guidage d'un véhicule et procédé de commande d'un véhicule par un système correspondant**

Steuersystem zum Erhöhen der Sicherheit eines schnellen Fahrzeugs, insbesondere eines Fahrzeugs, das von einem Bediener gesteuert wird, der sich innerhalb oder ausserhalb des Fahrzeugs befindet, Einrichtung zum Führen und Verfahren zum Steuern eines Fahrzeugs auf der Basis eines derartigen Systems

Control system for increasing safety in a fast vehicle, especially for a vehicle guided by an operator who may be located inside or outside the vehicle, installation for guiding a vehicle and method for controlling a vehicle by a corresponding system

(84) Etats contractants désignés:
**DE ES GB IT**

(30) Priorité: **27.12.1995 FR 9515579**

(43) Date de publication de la demande:
**02.07.1997 Bulletin 1997/27**

(73) Titulaire: **THALES SYSTEMES AEROPORTES S.A.**
**92210 Saint-Cloud (FR)**

(72) Inventeurs:
  • **Le Gusquet, Frédéric**
    **75018 Paris (FR)**
  • **Tissedre, Marc**
    **75013 Paris (FR)**
  • **Saglio, Christophe**
    **92130 Antony (FR)**
  • **Salanson, Philippe**
    **78000 Versailles (FR)**

(74) Mandataire: **Plaçais, Jean-Yves et al**
**Cabinet Netter,**
**36, avenue Hoche**
**75008 Paris (FR)**

(56) Documents cités:
**EP-A- 0 325 298**     **WO-A-90/02370**
**DE-A- 4 201 142**     **GB-A- 2 095 350**
**US-A- 5 155 683**

• **Van Zanten, A.; Erhardt, R.; Pfaff, G.:<<FDR - Die Fahrdynamikregelung von Bosch>>, ATZ Automobiltechnische Zeitschrift (DE), volume 96; 1994, N° 11, pages 674-689**
• **Brochure: <<VDO - Querschnitt 2; Tempostat E>>; VDO Adolf Schindling AG, Schwalbach/Ts. (DE), pages 1-17**
• **Van Zanten, A.; Erhardt, R.; Pfaff, G.:<<FDR - Die Fahrdynamikregelung von Bosch>>, ATZ Automobiltechnische Zeitschrift (DE), volume 96; 1994, N 11, pages 674-689**

## Description

L'invention concerne un système de commande des organes moteur et de direction d'un véhicule,
une installation pour le guidage d'un véhicule et un procédé de commande d'un véhicule, pour la sécurisation
d'un véhicule rapide, notamment guidé par un opérateur
embarqué ou non dans ledit véhicule, selon le préambule de la revendication 1.

Elle trouve une application particulière et non
limitative dans le guidage d'un véhicule terrestre rapide
par un opérateur embarqué ou non dans ledit véhicule.

On connaît déjà des dispositifs de commande
de véhicule terrestre capables d'élaborer, en temps réel,
selon un servomécanisme approprié, des consignes-
actionneur pour commander les organes moteur et de
direction dudit véhicule terrestre.

Par exemple, le document GB-A-2 095 350 décrit un servomécanisme qui élabore une consigne-actionneur pour l'organe moteur en tenant compte de consignes de référence relatives aux déplacements longitudinal et transversal du véhicule ainsi que de signaux
représentatifs des déplacements longitudinal et transversal du véhicule.

Un tel servomécanisme permet de contrôler
uniquement le déplacement longitudinal (à l'aide de l'actionnement sur commande des freins). Par contre, même s'il tient compte de l'écart entre un axe longitudinal
et le véhicule, le contrôle du déplacement transversal
du véhicule n'est pas autorisé mais est réalisé par le
conducteur à bord du véhicule. Il en résulte une sécurisation automatique insuffisante et incomplète de la stabilité du véhicule, notamment à grande vitesse longitudinale.

La Demanderesse s'est posé le problème de
fournir un servomécanisme capable de sécuriser, même à grande vitesse longitudinale, les déplacements
longitudinal et transversal du véhicule.

Ce problème est résolu par un système de
commande d'un véhicule selon les caractérisques de la
revendication 1.

En d'autres termes, si la consigne de référence
transversale associée au déplacement transversal du
véhicule est incompatible de la vitesse longitudinale
courante du véhicule, le dispositif de commande selon
l'invention réalise une adaptation de ladite vitesse longitudinale couplée à une commande de l'organe de direction, de telle sorte que la consigne-actionneur transversale relative au déplacement transversal du véhicule, rallie, le plus rapidement possible, la consigne de référence transversale relative au déplacement transversal du véhicule, tout en respectant certaines caractéristiques du véhicule et/ou de l'environnement dans lequel
il se déplace.

Dans la suite du texte, on entend par "première
consigne de référence", celle associée à la vitesse longitudinale du véhicule, "seconde consigne de référence", celle associée au déplacement transversal du véhicule, "première consigne-actionneur", celle relative à
l'organe moteur, "seconde consigne-actionneur", celle
relative à l'organe de direction, "premier signal capté",
celui représentatif de la vitesse longitudinale courante,
et "second signal capté", celui représentatif de la courbure courante (angle de roue) du véhicule.

Comme on le verra plus en détail ci-après, les
consignes de référence correspondent, le plus souvent,
à des consignes émanant d'un opérateur, ou bien sont
calculées à partir de ces consignes-opérateur.

Selon un premier mode de réalisation selon
l'invention, le servomécanisme d'adaptation de vitesse
comprend les étapes suivantes:

- a) calculer une première valeur maximale admissible pour la première consigne de référence, selon
  une première loi dépendant des premier et second
  signaux captés et de caractéristiques relatives au
  véhicule et/ou à l'environnement dans lequel il se
  déplace,

- b) comparer la première valeur maximale admissible avec la première consigne de référence reçue,

- c) en présence d'une première consigne de référence reçue inférieure à la première valeur maximale
  admissible calculée, prendre en compte la première
  consigne de référence reçue comme première consigne-actionneur, tandis qu'en présence d'une première consigne de référence reçue supérieure ou
  égale à la première valeur maximale admissible calculée, prendre en compte ladite première valeur
  calculée comme première consigne-actionneur,

- d) calculer une seconde valeur maximale admissible pour la seconde consigne de référence, selon
  une seconde loi dépendant des premier et second
  signaux captés et des caractéristiques relatives au
  véhicule, et/ou à l'environnement dans lequel il se
  déplace,

- e) comparer la seconde valeur maximale admissible calculée avec la seconde consigne de référence
  reçue,

- f) en présence d'une seconde consigne de référence reçue inférieure à la seconde valeur maximale
  admissible calculée, prendre en compte la seconde
  consigne de référence reçue comme seconde consigne-actionneur, tandis qu'en présence d'une seconde consigne de référence reçue supérieure ou
  égale à la seconde valeur calculée, prendre en
  compte ladite seconde valeur calculée comme seconde consigne-actionneur,

l'adaptation de la première consigne-actionneur étant
réalisée conformément aux étapes a) à c) jusqu'à ce que
la seconde consigne-actionneur corresponde le plus rapidement possible à la seconde consigne de référence conformément aux étapes d) à f), tout en respectant certaines caractéristiques du véhicule et/ou de l'environnement dans lequel il se déplace.

Avantageusement, pour éviter d'éventuelles oscillations parasites dans le comportement du véhicule, il est prévu d'introduire, selon l'invention, un hystérésis dans l'adaptation de vitesse. Dans ce cas, en l'absence d'adaptation de vitesse longitudinale en cours, l'étape c) prévoit en outre, en présence d'une première consigne de référence reçue supérieure ou égale à la première valeur maximale admissible calculée, de déclarer qu'une adaptation est en cours et d'initialiser la valeur de la précédente première consigne-actionneur selon la première consigne-actionneur courante venant d'être ainsi déterminée.

Ainsi, en présence d'une adaptation de vitesse en cours, l'étape b) comprend les étapes suivantes:

- b1) déterminer une valeur constante représentative de l'hystérésis du servomécanisme d'adaptation de vitesse,

- b2) comparer la première valeur maximale admissible calculée et corrigée selon la valeur d'hystérésis prédéterminée avec la première consigne de référence reçue,

Et l'étape c) comprend l'étape suivante:

- c1) en présence d'une première consigne de référence reçue inférieure à ladite première valeur maximale admissible calculée et corrigée, prendre la première consigne de référence reçue comme première consigne-actionneur et déclarer la fin de l'adaptation, tandis qu'en présence d'une première consigne de référence reçue supérieure ou égale à la première valeur maximale admissible calculée et corrigée, prendre en compte comme première consigne-actionneur la valeur minimum choisie parmi le groupe formé par ladite première valeur maximum admissible calculée, la première consigne de référence reçue et la précédente première consigne-actionneur, et initialiser la valeur de la précédente première consigne-actionneur à celle de la première consigne-actionneur courante.

En pratique, les caractéristiques relatives au véhicule sont choisies dans le groupe formé par les caractéristiques géométriques, morphologiques, dynamiques et d'attitude du véhicule, et les précédentes première et seconde consignes de référence reçues.

En pratique, les premiers moyens capteurs comprennent au moins un instrument choisi dans le groupe formé par un codeur sur arbre de transmission ou sur roue, un tachymètre, et analogue.

Selon une variante de l'invention, les seconds moyens capteurs comprennent au moins un instrument choisi dans le groupe formé par un codeur d'angle de roue, un potentiomètre d'angle de roue, et analogue.

En pratique, les premiers moyens actionneurs comprennent au moins un organe choisi dans le groupe formé par une chaîne de commande du frein, de l'accélérateur, de la boîte de vitesse, de la boîte de transfert, de la chaîne de transmission mécanique du véhicule, et analogue.

Selon une autre variante de l'invention, les seconds moyens actionneurs comprennent au moins un organe choisi dans le groupe formé par une chaîne de commande du volant du véhicule, et analogue.

Les moyens de commande du véhicule comprennent un calculateur embarqué.

Avantageusement, les premiers et seconds moyens actionneurs, ainsi que les organes moteur et de direction du véhicule constituent des moyens actifs du véhicule propres à délivrer respectivement un signal représentatif de la position et/ou de l'état courant desdits moyens actifs, et le dispositif de commande comprend en outre des moyens de réception des signaux délivrés par lesdits moyens actifs du véhicule.

La présente invention a également pour objet une installation pour le guidage d'un véhicule, par un opérateur embarqué ou non dans ledit véhicule selon la revendication 12, et qui est caractérisée par le fait que le véhicule est équipé du système de commande décrit ci-avant.

La présente invention a également pour objet une installation dans laquelle l'opérateur est situé dans une station distante du véhicule, et qui est caractérisée en ce qu'elle comprend, embarqués sur le véhicule:

- des moyens de commande-véhicule propres à élaborer, à cadence choisie, les première et seconde consignes-actionneur en réponse aux première et seconde consignes de référence calculées au moins en partie à partir de consignes-opérateur émanant de l'opérateur, via la station,

- des moyens de prises de vues pour enregistrer des images de l'environnement dans lequel le véhicule se déplace,

- des moyens d'émission/réception-véhicule d'informations avec la station distante, pour transmettre les images enregistrées à la station distante, ainsi que les informations délivrées par les moyens actifs et capteurs du véhicule et pour recevoir les consignes-opérateur émanant de l'opérateur, via la station,

en ce qu'elle comprend au niveau de la station distante:

- des moyens d'émission/réception-station d'informations avec le véhicule, pour recevoir les images transmises par le véhicule ainsi que les informations délivrées par les moyens actifs et capteurs du véhicule, et pour transmettre au véhicule les consignes-opérateur,

- des moyens de visualisation des images ainsi reçues,

- des moyens de sélection et de validation propres à valider au moins certaines consignes-opérateur relatives au déplacement du véhicule, à l'aide de l'image visualisée, et des informations provenant des moyens actifs et capteurs du véhicule, et

- des moyens de commande-stationpropres à piloter les moyens de visualisation, les moyens de sélection et de validation, ainsi que les moyens d'émission/réception de la station.

Les moyens de commande-véhicule permettent ainsi d'assurer des fonctions dont l'opérateur se trouve ainsi déchargé. Une telle installation permet notamment de réduire la charge de travail de l'opérateur, de réduire le volume et la fréquence des informations transitant entre le véhicule et la station, et de limiter par là même le risque de surcharge informative de l'opérateur, source de fatigue et de risque (non perception d'un danger, voire mauvaise interprétation des informations restituées).

Selon une autre variante de l'invention, l'installation comprend en outre, embarqués dans le véhicule:

- des moyens de localisation du véhicule propres à capter et délivrer des informations relatives à la localisation du véhicule, et

dans la station distante:

- des moyens propres à générer sur l'image visualisée des informations relatives à la position courante du véhicule en fonction des informations de localisation ainsi reçues, en vue de participer à l'élaboration de certaines au moins des consignes-opérateur.

Selon un mode de réalisation préféré de l'invention, les moyens de sélection et de validation sont propres à sélectionner un mode de mobilité prédéterminé du véhicule, choisi dans le groupe formé par le mode de mobilité sur points de passage, le mode de mobilité sur segment, le mode de mobilité sur commande en lacet et le mode de mobilité sur commande en vitesse de lacet.

Ces différents modes de mobilité, rangés ci-avant par niveau d'automatisme décroissant, possèdent chacun des interfaces de consigne-opérateur qui peuvent être directement utilisés pour mettre en oeuvre des fonctions choisies sans avoir à utiliser les automatismes de niveau supérieur. De plus, chaque mode de mobilité est exclusif, l'un par rapport à l'autre.

En pratique, les moyens de sélection et de validation comprennent un clavier ou analogue pour choisir le mode de mobilité du véhicule.

Avantageusement, les moyens de sélection et de validation comprennent un manipulateur à poignée pour la sélection et la validation de certaines consignes-opérateur et une manette associée à la sélection et à la validation de la consigne-opérateur relative à la vitesse longitudinale de croisière du véhicule.

En pratique, le mode de mobilité sur segment comprend, en association avec la sélection et la validation d'une consigne-opérateur relative à la vitesse longitudinale de croisière du véhicule, les étapes suivantes:

- i) au niveau de l'opérateur, sélectionner et valider sur l'image visualisée un segment-opérateur de longueur et orientation choisies, et transmettre aux moyens de commande du véhicule, le segment-opérateur ainsi sélectionné et validé, et

- ii) au niveau des moyens de commande-véhicule, calculer, à cadence choisie, les valeurs des différentes première et seconde consignes de référence en fonction des consignes-opérateur ainsi reçues, et déterminer les première et seconde consignes-actionneur en fonction des première et seconde consignes de référence ainsi calculées.

Dans le mode de mobilité sur segment, le manipulateur à poignée comprend des moyens propres à désigner sur l'image visualisée un segment-opérateur d'une longueur variable, ayant des première et seconde extrémités mobiles, l'extrémité mobile initiale étant reliée à un point fixe de l'image correspondant à un point fixe choisi du véhicule et l'extrémité finale définissant le point de l'environnement où le véhicule doit aller et s'arrêter.

Avantageusement, le manipulateur à poignée est propre à être déplacé rectilignement et/ou en rotation par l'opérateur selon les axes orthogonaux X, Y, et Z, de façon séparée et/ou cumulative.

En premier lieu, le manipulateur à poignée est propre à être déplacé par l'opérateur selon l'axe Y perpendiculaire à l'axe de déplacement longitudinal du véhicule, pour déplacer l'extrémité finale du segment-opérateur selon l'axe Y, le segment-opérateur étant parallèle à l'axe longitudinal du véhicule.

En second lieu, le manipulateur à poignée est propre à être déplacé par l'opérateur selon l'axe X parallèle à l'axe de déplacement longitudinal du véhicule, pour déplacer l'extrémité finale du segment-opérateur selon l'axe X, le segment-opérateur étant parallèle à l'axe longitudinal du véhicule.

En troisième lieu, le manipulateur à poignée est propre à être tourné par l'opérateur par rapport à l'axe Z perpendiculaire à l'axe de déplacement longitudinal du véhicule, pour appliquer une courbure aux extrémités initiale et finale du segment-opérateur par rapport à l'axe Z.

Avantageusement, l'étape i) comprend en outre l'étape qui consiste à déterminer une marge-opérateur accordée par l'opérateur au véhicule dans l'asservissement sur le segment-opérateur ainsi validé et l'étape ii) consiste à tenir compte de cette marge-opérateur dans l'asservissement du véhicule.

Selon encore une autre variante de l'invention, dans le mode de mobilité sur commande en vitesse de lacet, en association avec la sélection et la validation d'une consigne-opérateur relative à la vitesse longitudinale de croisière du véhicule, le manipulateur à poignée est propre à être déplacé par l'opérateur selon l'axe Y perpendiculaire à l'axe de déplacement longitudinal du véhicule, pour appliquer une consigne-opérateur relative à la vitesse de lacet du véhicule dans une première plage de vitesse de lacet, tandis que le manipulateur est propre à être tourné par l'opérateur par rapport à l'axe Z perpendiculaire à l'axe de déplacement longitudinal du véhicule, pour appliquer une consigne-opérateur relative à la vitesse de lacet dans une seconde plage de vitesse différente de la première plage.

Selon une autre variante de l'invention, le mode de mobilité sur commande à lacet, en association avec la sélection et la validation d'une consigne-opérateur relative à la vitesse longitudinale de croisière du véhicule, comprend les étapes suivantes:

- 1) prévoir sur l'image visualisée, un axe formant horizon virtuel pour le véhicule dans l'environnement dans lequel il se déplace,

- 2) prévoir sur l'horizon, un premier indicateur propre à se déplacer le long dudit horizon et à indiquer le lacet courant du véhicule sur ledit horizon,

- 3) prévoir sur l'horizon, un second indicateur propre à se déplacer le long dudit horizon, et à indiquer le reflet de la position courante du manipulateur à poignée,

- 4) prévoir sur l'horizon, un troisième indicateur propre à se déplacer le long dudit horizon, et à indiquer la consigne-opérateur relative au lacet du véhicule, et

- 5) sélectionner et valider à l'aide du manipulateur, la consigne-opérateur relative au lacet, à l'aide des premier et second indicateurs.

Avantageusement, le manipulateur à poignée comprend des moyens permettant, lors du déplacement du véhicule, de passer du mode de mobilité sur commande en vitesse de lacet au mode de mobilité sur commande en lacet et réciproquement.

Selon encore une autre variante de l'invention, dans le mode de mobilité sur points de passage, le manipulateur à poignée comprend des moyens propres à désigner sur l'image visualisée au moins un point définissant le point de l'environnement où le véhicule doit aller et s'arrêter.

En pratique, le mode de mobilité sur points de passage, en association avec la validation d'une consigne-opérateur relative à la vitesse longitudinale de croisière comprend les étapes suivantes:

- désigner dans l'image visualisée une pluralité de points de passage formant une trajectoire-opérateur, le véhicule devant aller et s'arrêter au dernier point de la trajectoire-opérateur,

- valider la totalité ou une partie de la trajectoire-opérateur ainsi désignée, et

- au niveau des moyens de commande-véhicule, élaborer, à cadence choisie, les différentes première et seconde consignes de référence en fonction de la trajectoire-opérateur ainsi validée et de la position courante du véhicule.

Avantageusement, le mode de mobilité sur points de passage comprend en outre un comportement autonome du véhicule du type embardée, mis en place automatiquement ou en réponse à une commande de l'opérateur, en vue d'éviter un obstacle le cas échéant.

En pratique, le comportement autonome sur embardée automatique comprend les étapes suivantes:

- prévoir des moyens de détection propres à détecter un obstacle sur la trajectoire-opérateur du véhicule,

- effectuer un écart par rapport à la trajectoire-opérateur du véhicule de manière à éviter l'obstacle ainsi détecté, tout en respectant la marge-opérateur, l'écart étant réalisé à une vitesse longitudinale compatible avec les caractéristiques du véhicule et/ou de l'environnement dans lequel il se déplace,

- maintenir l'écart jusqu'au dépassement de l'obstacle, et

- retourner à la trajectoire-opérateur du véhicule après dépassement.

En variante, le comportement autonome sur embardée opérateur comprend les étapes suivantes:

- sur l'image visualisée, par l'opérateur, en réponse à un événement choisi, déterminer un écart-opérateur par rapport à la trajectoire-opérateur,

- élaborer, à cadence choisie, les différentes première et seconde consignes de référence en tenant compte dudit écart-opérateur ainsi déterminé, de la trajectoire-opérateur et de la position courante du véhicule.

En pratique, les moyens d'émission/réception de la station et du véhicule communiquent entre eux selon une technologie de communication appropriée et choisie dans le groupe formé par la technologie radiofréquence, la technologie filaire à fibre optique ou fil électrique, et analogue.

Très avantageusement, à certaine consigne-opérateur de certain mode de mobilité, est associée une distance de validité correspondant à la validité spatiale de ladite consigne-opérateur et en cas d'absence d'au moins une nouvelle consigne-opérateur à l'issue du parcours de la distance de validité, les moyens de commande-véhicule déclenchent l'arrêt du véhicule jusqu'à réception d'au moins une nouvelle consigne-opérateur.

La présente invention a également pour objet un procédé de commande d'un véhicule mis en oeuvre par le système de commande décrit ci-avant.

Elle a également pour objet un procédé de guidage d'un véhicule mis en oeuvre par une installation décrite ci-avant.

D'autres caractéristiques et avantages de l'invention apparaîtront à la lumière de la description détaillée ci-après, et des dessins dans lesquels :

- la figure 1 est une vue schématique des moyens essentiels et constitutifs de l'installation de guidage entre un véhicule terrestre et une station distante selon l'invention;

- la figure 2 est un organigramme illustrant différents modes de mobilité du véhicule et leurs consignes-opérateur associées selon l'invention;

- la figure 3 est un organigramme illustrant l'adaptation de vitesse longitudinale selon l'invention;

- la figure 4 est un organigramme illustrant l'adaptation du déplacement transversal selon l'invention;

- les figures 5A à 5D sont des chronogrammes illustrant l'adaptation de la vitesse en réponse à un coup de volant selon l'invention;

- les figures 6A et 6B sont des vues schématiques du manipulateur à poignée selon l'invention;

- les figures 7A et 7B représentent schématiquement le déplacement du manipulateur à poignée pour désigner le segment opérateur selon l'axe Y selon l'invention;

- les figures 8A et 8B représentent schématiquement le déplacement du manipulateur à poignée pour désigner selon l'axe Z le segment-opérateur selon l'invention;

- les figures 9A et 9B représentent schématiquement le déplacement du manipulateur à poignée pour désigner, selon l'axe des X, le segment-opérateur selon l'invention;

- les figures 10 à 13 représentent des images illustrant la négociation d'un virage en mode de mobilité sur segment selon l'invention;

- la figure 14 représente schématiquement l'image visualisée de l'environnement dans lequel se déplace le véhicule avec incrustation des indicateurs en mode de mobilité en lacet;

- la figure 15 illustre schématiquement l'image visualisée illustrant la réalisation d'une embardée automatique selon l'invention;

- la figure 16 est une vue d'un véhicule terrestre équipé du dispositif de commande selon l'invention; et

- la figure 17 est vue schématique du poste opérateur situé dans la station distante selon l'invention.

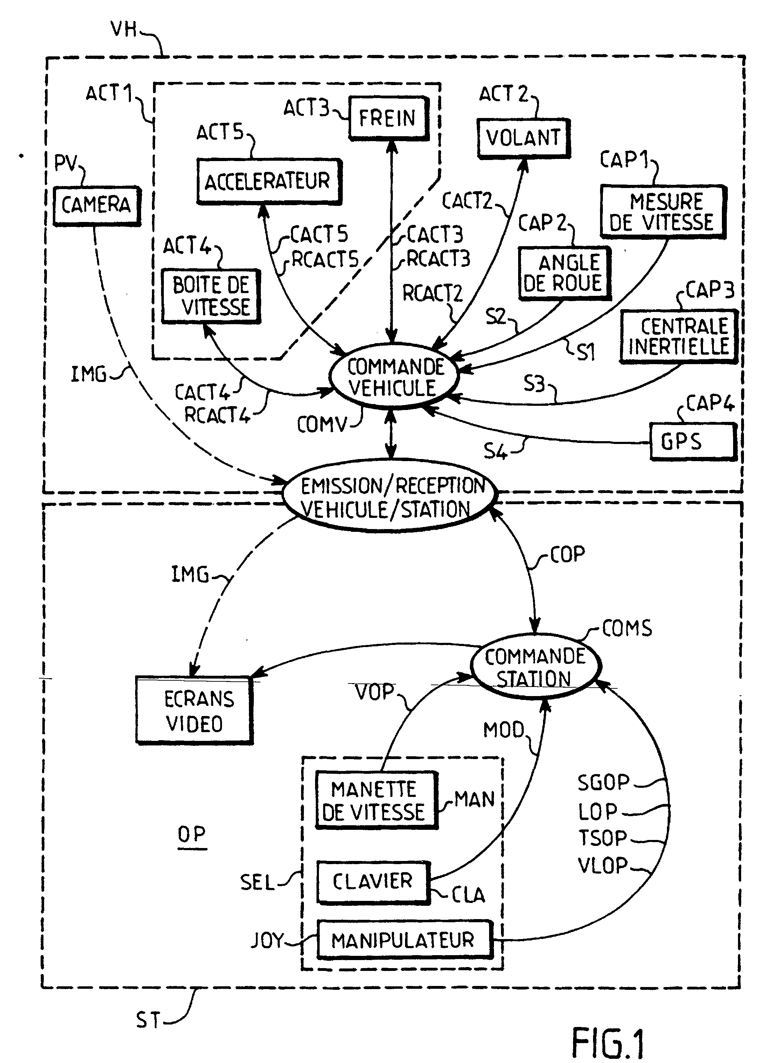

Sur la figure 1, la référence VH désigne un véhicule terrestre guidé par une installation de guidage selon l'invention.

Le véhicule terrestre VH peut être un véhicule à propulsion thermique ou électrique, équipé des moyens classiques de ce genre de véhicule. Il est doté d'un mode autonome dans lequel il est susceptible d'être guidé par un opérateur embarqué ou non dans le véhicule. Le véhicule terrestre peut aussi être un robot mobile spécifique.

Le véhicule terrestre est équipé de moyens actionneurs ACT1 de l'organe moteur et de moyens actionneurs ACT2 de l'organe de direction.

D'une façon générale, les moyens actionneurs ACT1 comprennent au moins un organe choisi dans le groupe formé par une chaîne de commande du frein ACT3, de l'accélérateur ACT5, de la boîte de vitesses ACT4, de la boîte de transfert, de la chaîne de transmission mécanique du véhicule, et analogue.

De leur côté, les moyens actionneurs ACT2 comprennent au moins un organe choisi dans le groupe formé par une chaîne de commande du volant du véhicule ou analogue.

Selon l'invention, des moyens de commande sont prévus pour sécuriser le déplacement rapide du véhicule.

Ces moyens de commande pilotent, en plus des moyens actionneurs mentionnés ci-avant, des moyens capteurs CAP1 et CAP2 capables de capter, et délivrer, en temps réel, respectivement un premier signal S1 représentatif de la vitesse longitudinale courante du véhicule, et un second signal S2 représentatif du déplacement transversal courant du véhicule.

Les moyens de commande COMV sont reliés de façon bidirectionnelle aux moyens actionneurs ACT1 et ACT2 mentionnés ci-avant. Dans le sens moyens de commande COMV-moyens actionneurs, un signal représentatif d'une consigne-actionneur CACT est acheminé, tandis que dans le sens moyens actionneurs vers moyens de commande, un signal représentatif de la position et/ou de l'état courant desdits moyens actionneurs est transmis RCACT.

Ce signal RCACT représentatif de la position et/ou de l'état des moyens actionneurs désigne le retour de la consigne-actionneur. Il est acheminé vers les moyens de commande.

Par exemple, la chaîne de commande du frein ACT3 reçoit la consigne-actionneur CACT3, et délivre en retour Le signal RCACT3.

Les moyens capteurs CAP1 comprennent au moins un instrument choisi dans le groupe formé par un codeur sur arbre de transmission ou sur roue, un tachymètre, et analogue.

Les moyens capteurs CAP2 comprennent au moins un instrument choisi dans le groupe formé par un codeur d'angle de roue, un potentiomètre d'angle de roue et analogue.

D'une façon générale, les moyens de commande COMV reçoivent des première et seconde consignes de référence CREF1 et CREF2 (calculées au moins en partie à partir de consignes-opérateur que l'on décrira plus en détail ci-après), en vue de commander respectivement les organes moteur et de direction du véhicule et élaborent, en temps réel, les première et seconde consignes-actionneur CACT1 et CACT2 selon un servomécanisme tenant compte au moins des premier et second signaux captés S1 et S2 et des première et seconde consignes de référence CREF1 et CREF2 ainsi reçues.

En pratique, la commande de l'organe moteur ACT1 du véhicule s'effectue au moins à l'aide de la chaîne de commande de frein ACT3, de la boîte de vitesse ACT4, et de l'accélérateur ACT5. Dans ces conditions, à partir de la consigne-actionneur CACT1, le servomécanisme calcule à tout moment les consignes-actionneur CACT3, CACT4, et CACT5 associées respectivement à la chaîne de commande de frein ACT3, de la boîte de vitesse ACT4, et de l'acélérateur ACT5.

Afin de sécuriser le véhicule, notamment dans le cas d'une vitesse longitudinale élevée, il est prévu un servomécanisme selon l'invention dans lequel, en réponse à la seconde consigne de référence CREF2, les moyens de commande adapte, en temps réel, la première consigne actionneur CACT1 jusqu'à ce que la seconde consigne actionneur CACT2 corresponde à la seconde consigne de référence CREF2.

En d'autres termes, si la consigne de référence CREF2 relative au mouvement transversal du véhicule est incompatible de la vitesse courante S1 du véhicule, les moyens de commande COMV réalisent une adaptation de la vitesse longitudinale couplée à une commande de l'organe de direction, de telle sorte que la consigne-actionneur CACT2 rallie, le plus rapidement possible, la consigne de référence CREF2 relative au déplacement transversal, tout en respectant certaines contraintes dynamiques du véhicule, ainsi que certaines caractéristiques de l'environnement dans lequel il se déplace.

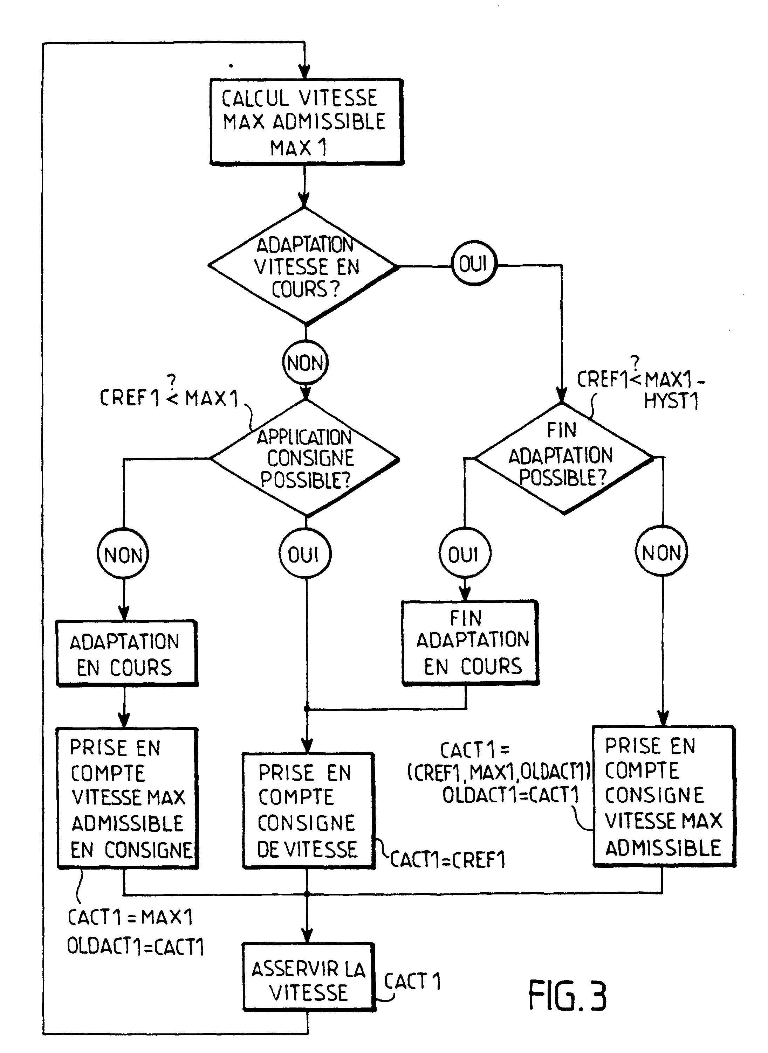

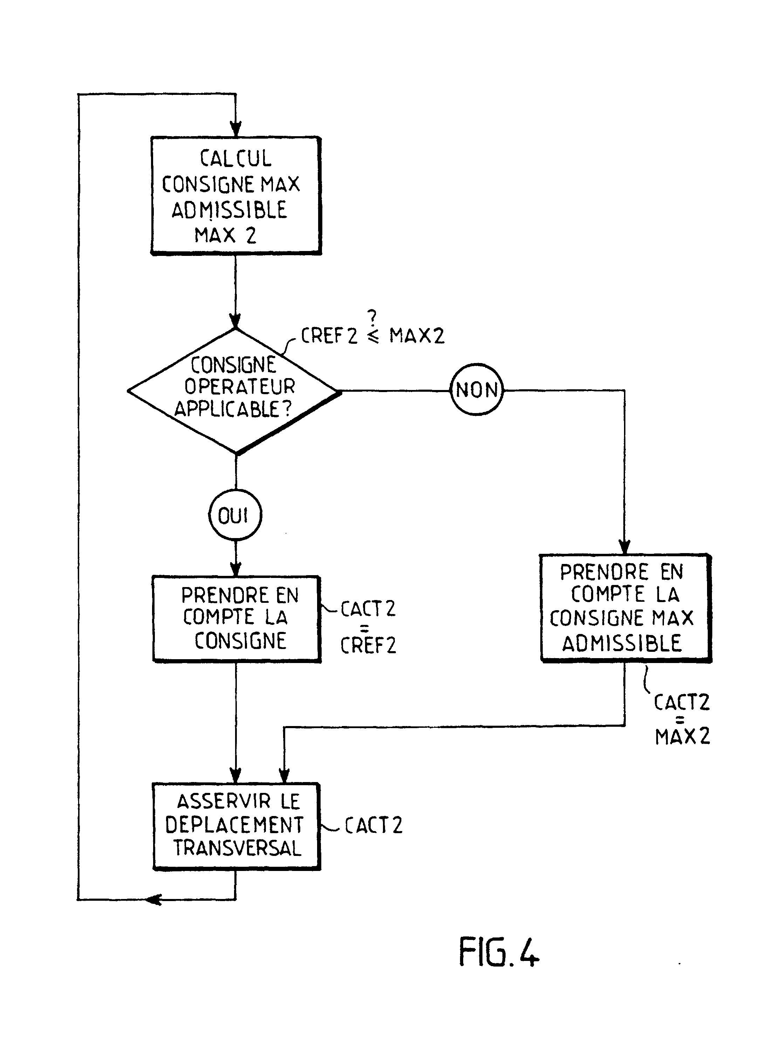

En référence aux figures 3 et 4, le servomécanisme d'adaptation de vitesse selon l'invention comprend les étapes suivantes :

- a) calculer une première valeur maximale admissible MAX1 pour la première consigne de référence CREF1, selon une première loi L1 dépendant des premier et second signaux captés S1 et S2 et de caractéristiques relatives au véhicule VH et/ou à l'environnement dans lequel il se déplace;

- b) comparer la première valeur maximale admissible MAX1 avec la première consigne de référence reçue CREF1;

- c) en présence d'une première consigne de référence reçue CREF1 inférieure à la première valeur maximale admissible calculée MAX1, prendre en compte la première consigne de référence reçue CREF1 comme première consigne-actionneur CACT1, tandis qu'en présence d'une première consigne de référence reçue CREF1 supérieure ou égale à la première valeur maximale admissible calculée, prendre en compte ladite première valeur calculée MAX1 comme première consigne-actionneur CACT1,

- d) calculer une seconde valeur maximale admissible MAX2 pour la seconde consigne de référence CREF2, selon une seconde loi L2 dépendant des premier et second signaux captés S1 et S2 et des caractéristiques relatives au véhicule, et/ou à l'environnement dans lequel il se déplace,

- e) comparer la seconde valeur maximale admissible calculée MAX2 avec la seconde consigne de référence reçue CREF2,

- f) en présence d'une seconde consigne de référence reçue CREF2 inférieure à la seconde valeur maximale admissible calculée MAX2, prendre en compte la seconde consigne de référence reçue CREF2 comme seconde consigne-actionneur CACT2, tandis qu'en présence d'une seconde consigne de référence reçue CREF2 supérieure ou égale à la seconde valeur calculée MAX2, prendre en compte ladite seconde valeur calculée MAX2 comme seconde consigne-actionneur CACT2.

L'adaptation de la première consigne-actionneur CACT1 est réalisée ici conformément aux étapes a) à c) jusqu'à ce que la seconde consigne-actionneur

CACT2 corresponde le plus rapidement possible à la seconde consigne de référence CREF2 conformément aux étapes d) à f), tout en respectant certaines caractéristiques du véhicule et/ou de l'environnement dans lequel il se déplace.

En d'autres termes, le servomécanisme comprend deux opérations mutuelles. La première opération consiste à adapter la vitesse courante du véhicule à la courbure spécifiée par l'opérateur tandis que la seconde étape consiste à adapter l'angle de rotation du volant à la vitesse courante et réciproquement. Ces deux opérations tiennent compte en pratique du contexte courant du véhicule ainsi que de l'environnement dans lequel il se déplace.

L'ensemble de ces deux étapes permet, si la marge-opérateur, que l'on décrira plus en détail ci-après, est suffisante, de sortir le véhicule d'une situation délicate sans reporter sur l'opérateur la gestion du potentiel d'adhérence ainsi que la marge par rapport au versement du véhicule. Ce servomécanisme consiste en fait en une action réflexe mise en oeuvre par les moyens de commande pour sécuriser le véhicule en cas de trop forte sollicitation par l'opérateur.

Il est à remarquer que les moyens de commande selon l'invention sont transposables à la conduite d'un véhicule classique dans lequel l'opérateur est embarqué dans le véhicule et utilise le servomécanisme selon l'invention d'une manière similaire à l'ABS ("Antiblocking System").

Sur les figures 5A à 5D, on a représenté des chronogrammes qui illustrent l'action de l'adaptation de vitesse conformément à l'invention.

Par exemple, en réponse à un "coup de volant" (consigne opérateur destinée à l'élaboration de la seconde consigne de référence) à une vitesse longitudinale courante S1 de 80 km/h, le véhicule, équipé du servomécanisme selon l'invention, a pour réaction d'agir sur la commande de freinage (première consigne-actionneur) afin de stabiliser l'accélération transversale du véhicule. Cette stabilisation de l'accélération transversale résulte d'une commande appropriée de l'angle de roue du véhicule (seconde consigne-actionneur) qui fait tourner les roues du véhicule de manière sûre en cohérence avec la vitesse courante du véhicule. Ainsi, l'intention de l'opérateur (coup de volant à 80 km/h) est bien prise en compte (ici un écart brutal de la trajectoire sur un côté), mais sa réalisation est sécurisée. Il est à remarquer que ce mécanisme d'adaptation peut être également mis en oeuvre pour aider l'opérateur à négocier un virage, abordé à trop grande vitesse.

Sur la figure 5A, la consigne de référence CREF2 relative au déplacement transversal du véhicule calculée à partir de la consigne-opérateur "coup de volant" est représentée en trait tireté tandis que la consigne-actionneur CACT2 relative au déplacement transversal est représentée en trait fort.

Il est à remarquer que la valeur de consigne CACT2 rejoint progressivement (ici pendant un intervalle de 6 s) la valeur de consigne CREF2. Cet intervalle de temps est variable. Il peut être déterminé selon une loi particulière tenant compte des caractéristiques du véhicule ainsi que celles de l'environnement dans lequel il se déplace.

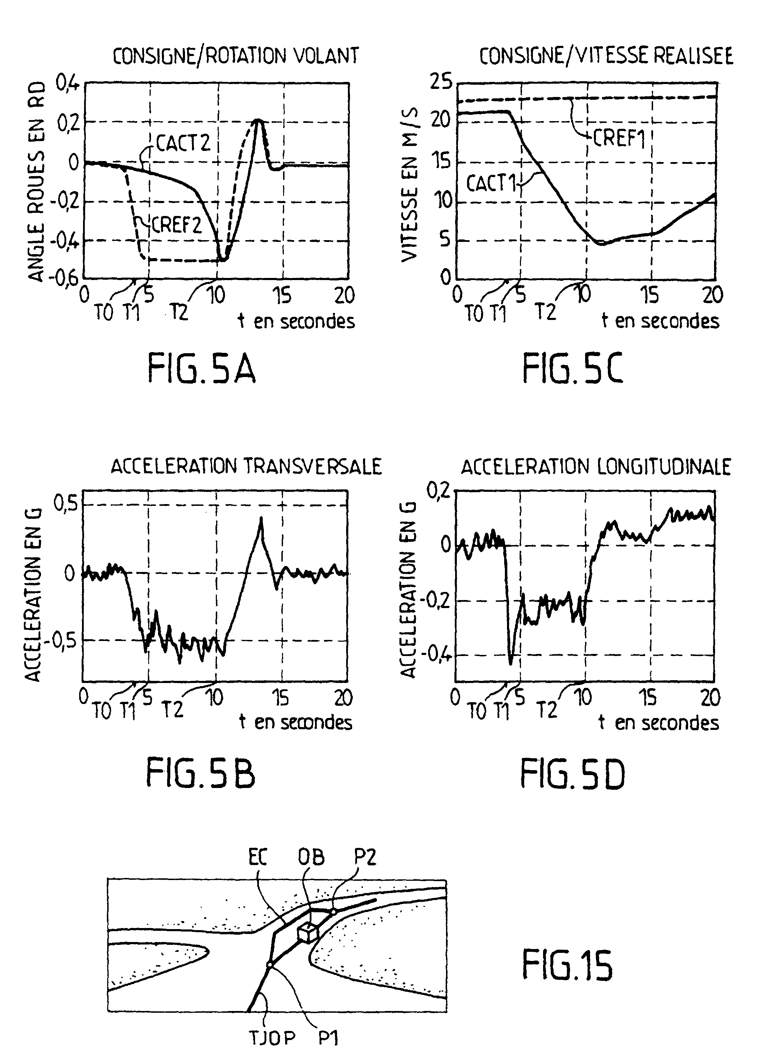

Sur la figure 5C, on observe que la vitesse longitudinale courante Si et la consigne de référence CREF1 sont sensiblement constantes autour de 23 m/sec. Par contre, en réponse à la consigne de référence CREF2 (coup de volant à T0 = 4s), le servomécanisme agit sur la consigne-actionneur CACT1 (ici freinage) afin d'atteindre une vitesse de l'ordre de 5 m/sec, sensiblement 6 secondes après l'actionnement du coup de volant.

Les figures 5B et 5D illustrent les accélérations transversales et longitudinales du véhicule pendant l'adaptation de vitesse selon l'invention.

Il est à remarquer que pendant l'intervalle T1 = 5s, et T2 = 10s, c'est-à-dire pendant l'adaptation de la seconde consigne-actionneur CACT2 selon l'invention, les accélérations transversale et longitudinale sont stabilisées, ce qui sécurise les déplacements longitudinal et transversal du véhicule, même à grande vitesse longitudinale.

Le servomécanisme de sécurisation relative à l'adaptation de vitesse joue ici à la fois sur le déplacement transversal et la stabilisation de la vitesse longitudinale du véhicule. L'asservissement transversal limite ici, à tout instant, la consigne d'angle de roue réalisable en fonction des contraintes dynamiques du moment.

Le calcul de la valeur maximale admissible MAX2 pour la consigne de référence CREF2 (relative au déplacement transversal du véhicule) peut s'écrire de la manière suivante :

$$(I) \qquad MAX2 = \min(\beta_{géo\ max}, Arctan(l.\gamma t / S1^2)$$

De même, la première valeur maximale admissible MAX1 peut s'écrire de la façon suivante :

$$(II) \qquad MAX1 = \sqrt{\gamma t.l / |\tan(\max(S2, \beta_{cons}))|}$$

avec S2 : angle de roues courant du véhicule,

MAX2 : angle de roues maximum autorisé lié aux contraintes dynamiques,

$\beta_{cons}$ : consigne d'angle de roues envoyée par l'opérateur (ou issue de la consigne de l'opérateur). Elle prend en compte les contraintes géométriques du véhicule (braquage maximum),

$\gamma t$ : accélération transversale maximum autorisée pour le véhicule,

l : empattement du véhicule,

$S_1$ : vitesse courante du véhicule,

MAX1 : vitesse maximum admissible par le véhicule liée au comportement courant du déplacement transversal (intention de l'opérateur).

Il est clair que les formules (I) et (II) proposées ici constituent des exemples simplifiés du point de vue des hypothèses utilisées, afin de faciliter la compréhension de l'invention.

Avantageusement, en cours d'adaptation, le calcul des valeurs maximales admissibles MAX1 et MAX2 tiennent compte des caractéristiques relatives au véhicule et/ou à l'environnement dans lequel il se déplace. Ces caractéristiques sont relatives au contexte courant. Plus précisément, les caractéristiques relatives au véhicule sont choisies dans le groupe formé par les caractéristiques géométriques, morphologiques, dynamiques, et d'attitude (émanant d'un capteur CAP3 de type centrale inertielle capable de capter un signal S3 représentatif de l'attitude courante du véhicule (tangage, roulis, orientation, vitesse d'orientation et accélération d'orientation)) du véhicule, et les précédentes première et seconde consignes de référence reçues.

Un des avantages de l'adaptation de vitesse selon l'invention est d'être facile à mettre en place. En effet, si l'opérateur est surpris par l'apparition d'un obstacle à éviter, par exemple sur sa trajectoire, il sollicite (action réflexe) fortement le mouvement transversal du véhicule (coup de volant) et le servomécanisme selon l'invention décrit ci-avant se met immédiatement en place.

Avantageusement, il est prévu en outre dans le servomécanisme d'adaptation de vitesse un mode tenant compte de l'hystérésis du servomécanisme.

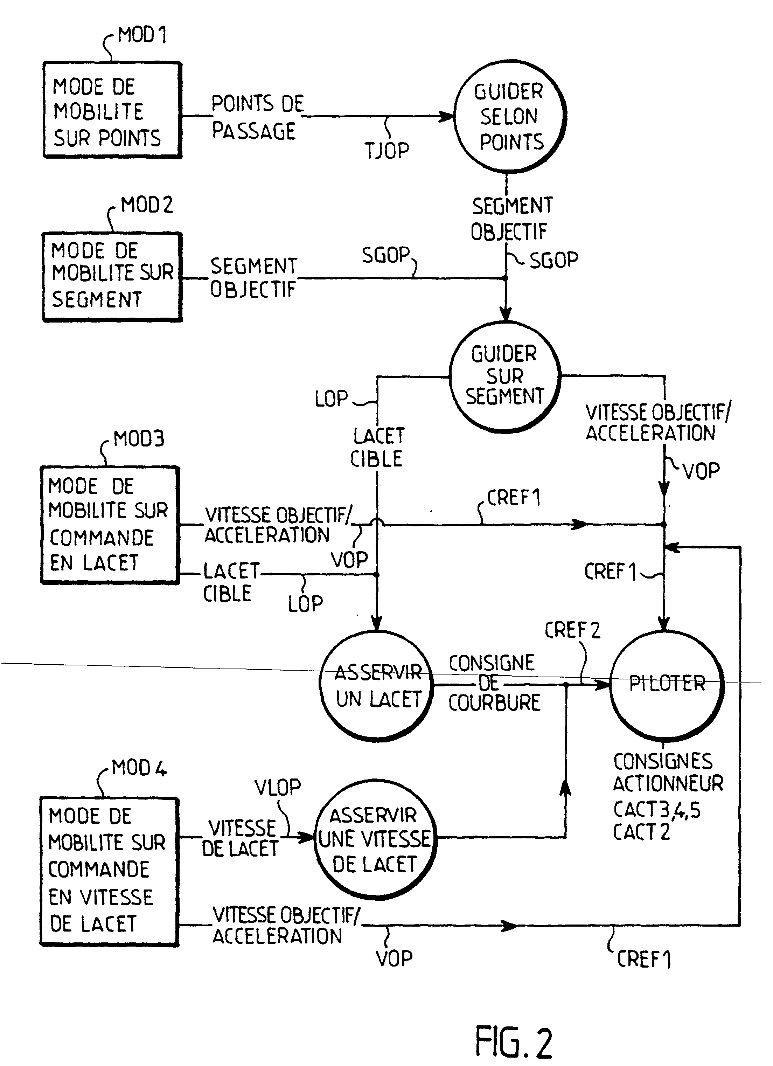

L'utilisation d'un hystérésis dans l'algorithme d'adaptation de vitesse selon l'invention comprend les étapes suivantes, en relation aux figures 2 et 3.

En l'absence d'adaptation de vitesse longitudinale en cours, l'étape c) prévoit en outre, en présence d'une première consigne de référence reçue CREF1 supérieure ou égale à la première valeur maximale admissible calculée MAX1, de déclarer qu'une adaptation est en cours et d'initialiser la valeur de la précédente première consigne-actionneur OLDCACT1 selon la première consigne-actionneur courante venant d'être déterminée OLDCACT1=CACT1.

En présence d'une adaptation de vitesse en cours, l'étape b) comprend alors les étapes suivantes :

- b1) déterminer une valeur constante (par exemple 1 m/s) représentative de l'hystérésis du servomécanisme d'adaptation vitesse HYST1;

- b2) comparer la première valeur maximale admissible calculée et corrigée selon la valeur d'hystérésis prédéterminée MAX1-HYST1 avec la première consigne de référence reçue CREF1.

L'étape c) comprend alors l'étape suivante:

- c1) en présence d'une première consigne de référence reçue CREF1 inférieure à ladite première valeur maximale admissible calculée et corrigée MAX1-HYST1, prendre la première consigne de référence reçue CREF1 comme première consigne-actionneur CACT1 et déclarer la fin de l'adaptation.

Tandis qu'en présence d'une première consigne de référence reçue supérieure ou égale à la première valeur maximale admissible calculée et corrigée MAX1-HYST1, il est prévu de prendre en compte comme première consigne-actionneur CACT1, la valeur minimum choisie parmi le groupe formé par ladite première valeur maximum admissible calculée MAX1, la première consigne de référence reçue CREF1 et la précédente première consigne-actionneur OLDCACT1, et initialiser la valeur de la précédente première consigne-actionneur à celle de la première consigneactionneur courante OLDCACT1=CACT1.

En pratique, les moyens de commande COMV comprennent au moins un calculateur embarqué ou analogue. Par exemple, le calculateur est de type 68XXX de chez MOTOROLA.

Il est clair que l'opérateur peut être embarqué ou non dans le véhicule.

Dans un mode de réalisation préférée de l'invention, en référence à la figure 1, l'opérateur OP est situé dans une station distante ST du véhicule.

Dans ces conditions, l'invention concerne une installation de guidage dans laquelle il est prévu d'équiper le véhicule des moyens de commande décrits ci-avant et qui élaborent les première et seconde consignes-actionneur CACT1 et CACT2 en réponse aux première et seconde consignes de référence CREF1 et CREF2 calculées au moins en partie à partir de consignes-opérateur COP émanant de l'opérateur, via la station.

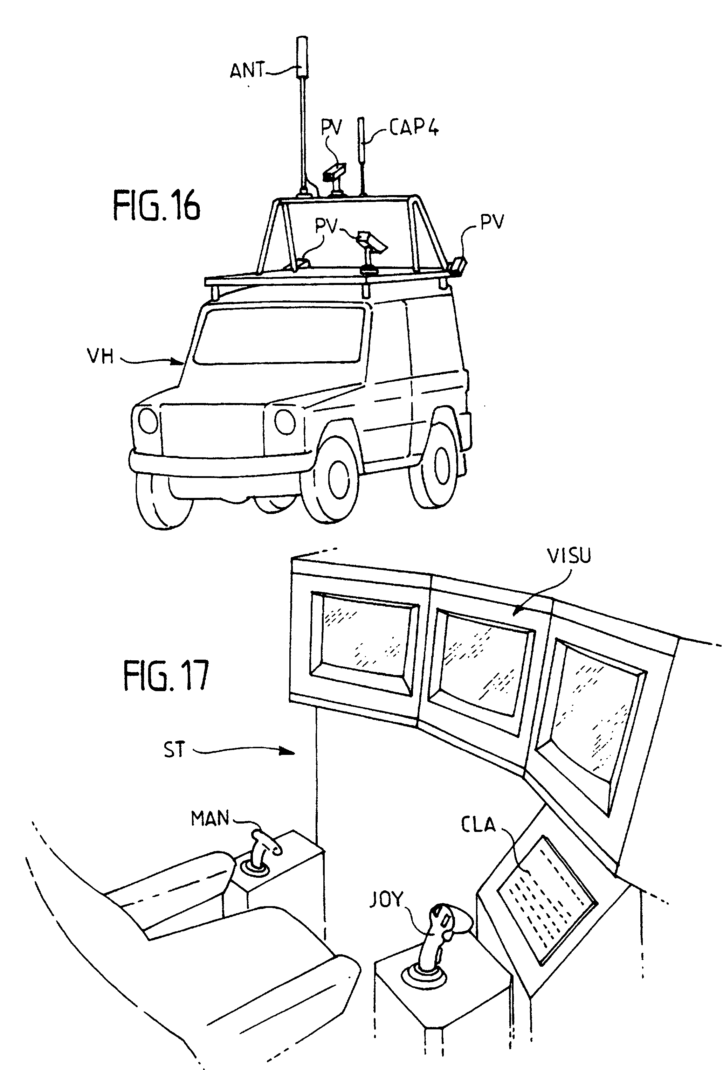

Il est nécessaire (figure 16) d'équiper en outre le véhicule de moyens de prise de vue PV pour enregistrer des images de l'environnement dans lequel le véhicule se déplace ainsi que des moyens d'émission/réception-véhicule ANT d'informations avec la station distante pour transmettre les images ainsi enregistrées vers la station distante, ainsi que les informations RCACT, S1, S2, S3, délivrées par les moyens actifs et capteurs du véhicule, et pour recevoir les consignes-opérateur COP émanant de l'opérateur via la station.

Par exemple, les moyens de prise de vue comprennent 4 caméras, une orientée dans le sens avant de déplacement du véhicule, une orientée dans le sens arrière de déplacement du véhicule, et deux orientées latéralement.

Au niveau de la station distante ST (figure 17), il est prévu, en corollaire, des moyens émission/réception-station d'informations avec le véhicule, pour recevoir les images IMG transmises par le véhicule, ainsi que les informations RCACT, S1, S2 et S3 délivrées par les moyens actifs et capteurs du véhicule, et pour transmettre au véhicule les consignes-opérateur COP.

Avantageusement, la station est équipée de moyens de visualisation VISU des images ainsi reçues.

Par exemple, les moyens de visualisation comprennent 3 écrans video, l'écran central étant associé à la diffusion des images provenant des caméras orientées dans le sens de déplacement du véhicule (sens avant et arrière) et les écrans latéraux étant associés à la diffusion des images provenant des caméras latérales.

Des moyens de sélection et de validation SEL permettent à l'opérateur de sélectionner et valider au moins certaines consignes-opérateur COP relatives au déplacement du véhicule, à l'aide de l'image visualisée IMG, et des informations RCACT, S1, S2 et S3 provenant des moyens actifs du véhicule ainsi que des moyens capteurs CAP1, CAP2 et CAP3.

Des moyens de commande station COMS pilotent les moyens de visualisation, les moyens de sélection et de validation, ainsi que les moyens d'émission/réception de la station.

Il est clair que lorsque l'opérateur est dans le véhicule, les moyens d'émission/réception véhicule et station sont inutiles.

De façon préférentielle, il est prévu d'embarquer dans le véhicule des moyens de localisation du véhicule capables de capter et délivrer des informations S4 relatives à la localisation du véhicule. Ces moyens de localisation comprennent des moyens capteurs CAP4 reliés aux moyens de commande-véhicule COMV qui gèrent les informations S4 ainsi captées. Par exemple, les moyens capteurs CAP4 sont de type GPS ("Global Positionning System") ou balise de positionnement absolu.

Côté station distante ST, il est prévu des moyens propres à générer sur l'image visualisée des informations relatives à la localisation courante du véhicule en fonction des informations de localisation ainsi reçues, en vue de participer à l'élaboration de certaines au moins des consignes-opérateur TJOP et SGOP que l'on décrira plus en détail ci-après.

Les moyens de sélection et de validation SEL permettent à l'opérateur de sélectionner et de valider un mode de mobilité MOD choisi du véhicule. Ainsi, il peut choisir un mode de mobilité parmi le groupe formé par le mode de mobilité sur points de passage MOD1, le mode de mobilité sur segment MOD2, le mode de mobilité sur commande en lacet MOD3 et le mode de mobilité sur commande en vitesse de lacet MOD4.

Ces différents modes de mobilité constituent différentes couches successives. Chacune de ces couches possède des interfaces de consigne-opérateur qui peuvent être directement utilisées par l'opérateur pour mettre en oeuvre des fonctions sans avoir à utiliser les fonctions d'ordre supérieur.

Il s'agit donc de modes de mobilité exclusifs les uns par rapport aux autres.

En référence à la figure 2, on a représenté un organigramme des différents modes de mobilité.

Les différents modes sont ici rangés par niveau d'automatisme décroissant. Le mode présentant le niveau d'automatisme le plus élevé est le mode MOD1.

Le mode de mobilité sur points de passage est un mode dit de "téléguidage" qui consiste à déplacer à distance un véhicule en contrôlant la trajectoire TJOP sur laquelle il s'asservit. L'opérateur spécifie ainsi une suite de points de passage. Il s'agit d'une progression par bonds.

Le mode de mobilité MOD2, sur segment, est aussi un comportement "de téléguidage" dans lequel l'opérateur spécifie un segment objectif SGOP sur lequel le véhicule s'asservit.

Les modes de mobilité MOD3 et MOD4 appartiennent au mode de "télépilotage", dans lequel il est prévu de déplacer à distance un véhicule en contrôlant ses déplacements longitudinal et transversal.

L'opérateur spécifie un lacet LOP ou une vitesse de lacet VLOP associée à une vitesse de déplacement longitudinal VOP (complétée éventuellement à une accélération de ralliement de la vitesse).

On entend ici par lacet du véhicule, l'orientation dudit véhicule dans l'environnement dans lequel il se déplace. Le lacet du véhicule peut, ici, être différent du cap du véhicule, dans la mesure où il ne dépend pas d'un repère magnétique ou autre.

Il est à remarquer que l'adaptation de vitesse décrite en référence aux figures 3 et 4 est susceptible d'être mise en oeuvre dans n'importe quel mode de mobilité décrit ci-avant. Cette action réflexe permet ainsi de réagir à l'apparition d'une situation estimée dangereuse, en attendant que le mode de mobilité de niveau supérieur soit à même de prendre en compte la situation et de générer des consignes-opérateur annulant la situation de danger et donc l'action réflexe.

Pour choisir le mode de mobilité du véhicule, il est prévu un clavier ou analogue CLA au niveau de la station ST.

Au niveau des moyens de sélection et de validation SEL, il est prévu en outre un manipulateur à poignée du type "joystick" JOY pour la sélection et la validation de certaines consignes-opérateur COP et une manette MAN associée à la sélection et à la validation de la consigne-opérateur relative à la vitesse de croisière du véhicule VOP.

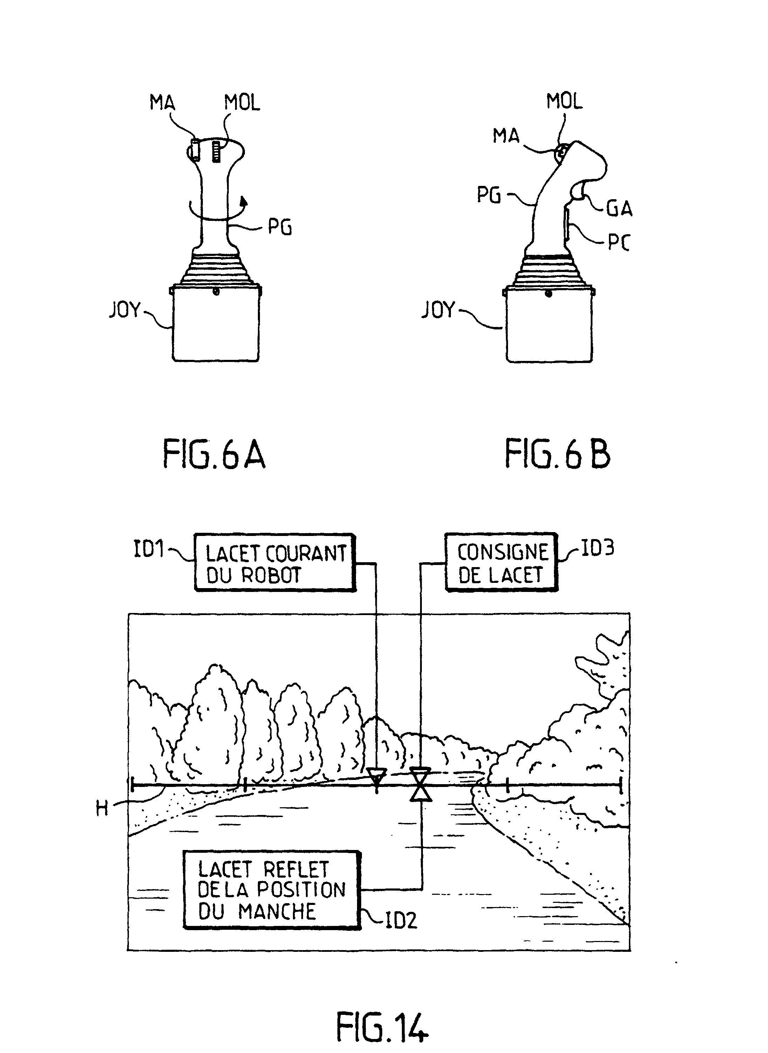

Sur les figures 6A et 6B, on a représenté un manipulateur à poignée.

Il comprend d'une façon classique une poignée PG. Cette poignée est équipée d'une gâchette GA dédiée notamment à la validation des consignes-opérateur et d'un bouton de prise en charge PC.

L'extrémité de la poignée est équipée d'une molette MOL dédiée notamment au mode de mobilité sur segment MOD2 ainsi que d'un bouton envoi/annulation MA dédié notamment au mode de mobilité sur points de passage MOD1.

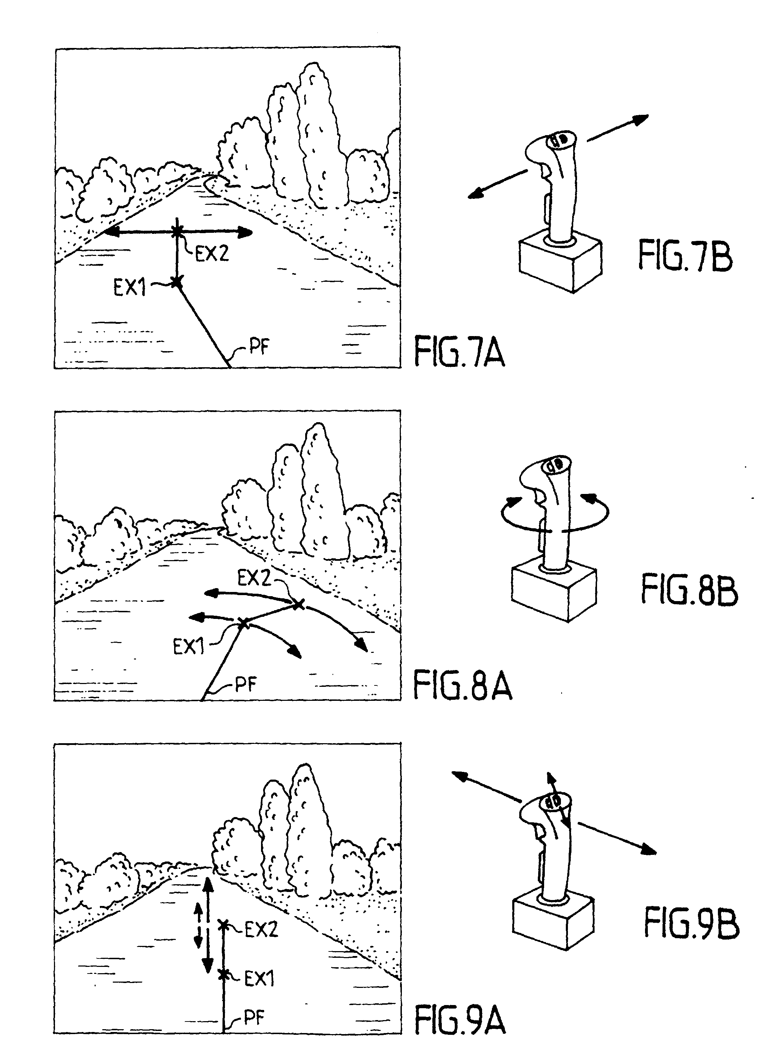

En référence aux figures 7A à 9B, dans le mode de mobilité sur segment MOD2, le manipulateur à poignée JOY comprend des moyens propres à désigner sur l'image visualisée un segment opérateur SGOP d'une longueur variable, ayant des première EX1 et seconde extrémités mobiles EX2. L'extrémité initiale EX1 est reliée à un point fixe PF de l'image correspondant à un point fixe choisi du véhicule. L'extrémité finale EX2 définit le point de l'environnement où le véhicule doit aller et s'arrêter.

Dans ce mode de mobilité sur segment MOD2, l'opérateur spécifie la direction générale qu'il souhaite voir prendre au véhicule en désignant directement à partir d'une image vidéo, un segment de droite SGOP sur lequel le véhicule va s'asservir comme s'il s'agissait d'une trajectoire.

Le véhicule prend également en compte une vitesse de croisière VOP, qu'il va s'efforcer de respecter, tout en s'adaptant aux conditions courantes.

Le mode de mobilité sur segment comprend ainsi, en association avec la sélection et la validation d'une consigne-opérateur VOP relative à la vitesse longitudinale de croisière du véhicule, les étapes suivantes :

- i) au niveau de l'opérateur, sélectionner et valider sur l'image visualisée un segment-opérateur d'une longueur et orientation choisies SGOP, et transmettre aux moyens de commande-véhicule COMV, le segment-opérateur ainsi sélectionné et validé, et

- ii) au niveau des moyens de commande-véhicule COMV, calculer, à cadence choisie, les différentes valeurs des première et seconde consignes de référence CREF1 et CREF2 en fonction des consignes-opérateur ainsi reçues SGOP et VOP, et déterminer les première et seconde consignes-actionneur CACT1 et CACT2 en fonction des première et seconde consignes de référence ainsi calculées CREF1 et CREF2.

Avantageusement, l'étape i) comprend en outre l'étape qui consiste à déterminer une marge-opérateur accordée par l'opérateur au véhicule dans l'asservissement sur le segment-opérateur ainsi validé et l'étape ii) consiste à tenir compte de cette marge-opérateur dans l'asservissement du véhicule.

Cette marge-opérateur est une distance qui indique la latitude accordée par l'opérateur au véhicule dans l'asservissement sur le segment objectif.

Cette marge peut être variable, c'est-à-dire d'une valeur déterminée au gré de l'opérateur, ou bien fixe, déterminée par défaut par les moyens de commande.

Les différentes valeurs successives des consignes de référence CREF1 et CREF2 sont élaborées et délivrées à une fréquence de l'ordre de 5 à 10 Hz, compatible avec la fréquence des moyens d'émission/réception des informations entre la station et le véhicule.

Les moyens de commande implémentés au niveau du véhicule cherchent en permanence à suivre le segment objectif SGOP ainsi sélectionné et validé au niveau de la station, et transmis au niveau des moyens de commande-véhicule.

Pour ce faire, les moyens de commande-véhicule déterminent, en fonction de la vitesse courante S1 du véhicule, un point cible sur le segment objectif SGOP, vers lequel les moyens de commande-véhicule asservissent le lacet du véhicule (consigne-actionneur de lacet CACT2 à rallier par les organes moteur et de direction du véhicule).

La vitesse adoptée sur le parcours tend à rejoindre la vitesse de croisière VOP spécifiée, en tenant compte des contraintes instantanées (de type dynamique du véhicule ou de qualité de la position délivrée par le système de localisation) et absolues (à tout moment, le véhicule doit pouvoir s'immobiliser sans dépasser le point extrême du segment EX2).

Par exemple, les moyens d'émission/réception du véhicule et de la station utilisent une technologie à radiofréquence dans laquelle les consignes-opérateur COP sont transmises ponctuellement ou périodiquement, vers le véhicule jusqu'à une fréquence de l'ordre de 5 à 10 Hz.

Ainsi, en cas de problème des transmissions ou si l'opérateur ne désire plus envoyer de consigne-opérateur (relâchement de la gâchette GA), le véhicule continue sa progression pour venir s'immobiliser sur le point extrême EX2 du dernier segment objectif reçu SGOP.

L'opérateur peut envoyer des consignes-opérateur à la fréquence qu'il souhaite, en fonction de ses différentes tâches.

En référence aux figures 7A à 9B, l'opérateur désigne directement le segment-opérateur SGOP sur l'image vidéo affichée sur son moniteur VISU. Pour cela, il positionne à l'aide du manipulateur à poignée, un curseur coloré désignant l'extrémité du segment EX2.

La consigne de vitesse VOP est spécifiée par un dispositif de type manette (comme une manette des gaz sur un avion), qui maintient la consigne de vitesse VOP même sans intervention ultérieure de l'opérateur. Il s'agit d'un avantage dans la mesure où le téléguidage peut se faire maintenant avec les jambes libres de toute tâche.

La désignation du segment-opérateur peut se faire suivant deux types de mouvements du manipulateur à poignée qui sont non exclusifs, à savoir l'écart de trajectoire (selon l'axe Y) ou la courbure (selon l'axe Z).

En référence aux figures 7A et 7B, le manipulateur à poignée est propre à être déplacé par l'opérateur selon un axe Y perpendiculaire à l'axe de déplacement longitudinal du véhicule. Le déplacement selon l'axe Y du manipulateur à poignée permet de déplacer l'extrémité finale EX2 du segment opérateur selon l'axe Y. Il est remarqué que, dans ce mode de mobilité, le segment opérateur ainsi désigné est parallèle à l'axe longitudinal du véhicule.

Pour effectuer un écart de courbure au segment, le manipulateur à poignée est propre à être tourné par l'opérateur par rapport à un axe Z perpendiculaire à l'axe de déplacement longitudinal du véhicule, pour appliquer une courbure aux extrémités initiale EX1 et finale EX2 du segment opérateur SGOP par rapport à l'axe Z.

Il est à remarquer que les deux points du segment EX1 et EX2 et le point fixe PF restent sur un même cercle de rayon variable.

Le manipulateur à poignée est aussi susceptible d'être déplacé par l'opérateur selon un axe X parallèle à l'axe de déplacement longitudinal du véhicule, pour déplacer l'extrémité finale EX2 du segment opérateur selon l'axe X, l'extrémité initiale s'éloignant en proportion de l'action de l'opérateur.

Il est à remarquer que l'éloignement du point final EX2 du segment SGOP permet d'augmenter l'horizon de responsabilité du véhicule, et l'autorise donc à atteindre des vitesses plus élevées. (Plus son objectif final est éloigné et plus il s'autorisera à aller vite.)

La molette MO est associée ici pour la correction fine sur l'axe des X.

L'envoi du segment objectif SGOP au véhicule est conditionnée à une action de l'opérateur sur la gâchette du manipulateur à poignée (validation).

L'opérateur peut ainsi piloter le véhicule en validant un segment en temps réel. Pour cela, il lui suffit de maintenir la gâchette validée en permanence.

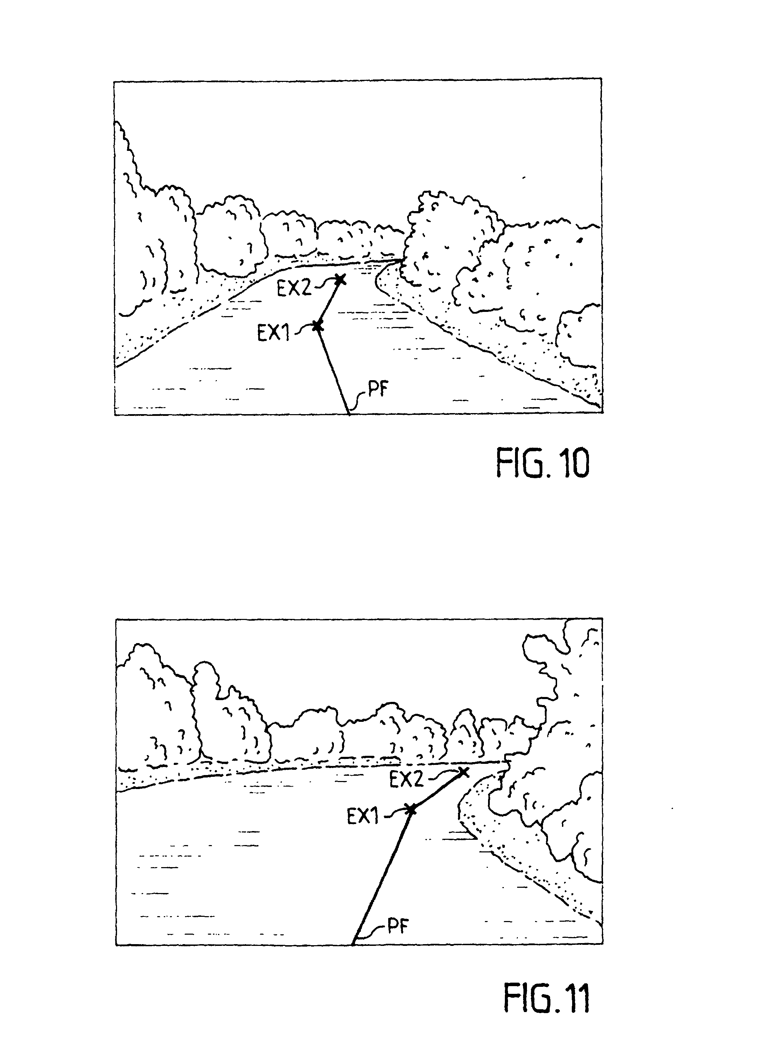

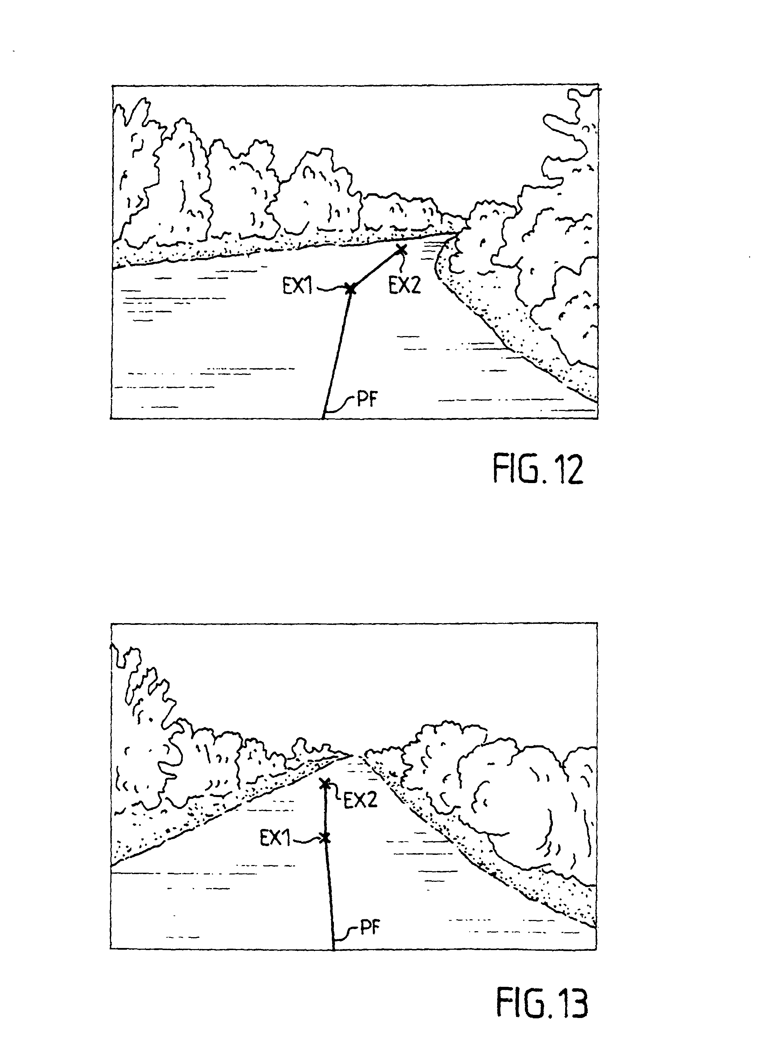

Les figures 10 à 13 illustrent la négociation d'un virage en téléguidage par segments objectifs. Le véhicule est arrêté à l'approche du virage, l'opérateur désigne alors un segment SGOP avant de l'envoyer au véhicule (figure 10). Une fois validé, avec la gâchette sur le manipulateur à poignée, le segment SGOP devient la consigne de mobilité du véhicule. Elle est liée au terrain et est visualisée (figures 11 à 13) dans une autre couleur que celle du segment dans l'opération de sélection et de désignation (figure 10).

En référence à la figure 11, le véhicule commence à s'asservir sur la trajectoire de consigne définie par le segment-opérateur SGOP validé, l'opérateur désignant le prochain segment.

Après la validation du nouveau segment par l'opérateur, le véhicule s'asservit sur le nouveau segment ainsi validé.

L'opérateur peut aussi maintenir constamment enfoncée la gâchette, il guide alors le véhicule en temps réel, le moindre mouvement de son manipulateur à poignée provoquant ainsi une évolution du véhicule en conséquence.

A tout moment, si l'opérateur lâche la gâchette de validation, le véhicule continue sa course le long du dernier segment objectif demandé, jusqu'à s'arrêter sur son point extrême.

Par ailleurs, dans le mode de mobilité sur commande en vitesse de lacet MOD4, en association avec la sélection et la validation d'une consigne-opérateur relative à la vitesse longitudinale de croisière du véhicule VOP, le manipulateur à poignée est propre à être déplacé par l'opérateur selon l'axe Y perpendiculaire à l'axe du déplacement longitudinal du véhicule, pour appliquer une consigne-opérateur relative à la vitesse de lacet du véhicule VLOP dans une première plage de vitesses de lacet PG1, tandis que le manipulateur est propre à être tourné par l'opérateur par rapport à l'axe Z perpendiculaire à l'axe du déplacement longitudinal du véhicule, pour appliquer une consigne-opérateur relative à la vitesse de lacet VLOP dans une seconde plage de vitesses PG2 différente de la première plage PG1.

Ainsi, la commande du déplacement transversal en mode de mobilité MOD4 (vitesse de lacet du véhicule) utilise les deux axes Y et Z transversaux du manipulateur à poignée.

En pratique, l'axe Y (droite/gauche) commande la pleine dynamique PG1 du véhicule (plein domaine de rotation du volant). C'est la commande privilégiée pour la manoeuvre, les basses vitesses et les fortes sollicitations du véhicule (brusque changement de trajectoire).

En revanche, l'axe Z de rotation spécifie une correction de déplacement transversal n'utilisant qu'un faible pourcentage du domaine PG2. C'est la commande réservée aux corrections de trajectoire à moyenne et haute vitesse, permettant de rectifier finement une trajectoire à haute vitesse, sans provoquer l'action réflexe d'adaptation.

Le manipulateur à poignée ne commande ici que le déplacement transversal du véhicule, la vitesse de croisière VOP du véhicule est spécifiée par l'intermédiaire du levier de type manette des gaz. La prise en compte de la position de cette manette des gaz est assujettie pour des raisons sécuritaires à la prise en charge PC du manipulateur à poignée par l'opérateur.

En référence à la figure 14, le mode de mobilité sur commande en lacet MOD3, en association avec la sélection et la validation d'une consigne opérateur relative à la vitesse longitudinale de croisière du véhicule VOP, comprend les étapes suivantes :

- 1) prévoir sur l'image visualisée, un axe H formant horizon virtuel pour le véhicule dans l'environnement dans lequel il se déplace,

- 2) prévoir sur l'horizon H, un premier indicateur ID1 propre à se déplacer le long dudit horizon et à indiquer le lacet courant LC du véhicule sur ledit horizon,

- 3) prévoir sur l'horizon H, un second indicateur ID2 propre à se déplacer le long dudit horizon H, et à indiquer le reflet de la position courante du manipulateur à poignée JOY,

- 4) prévoir sur l'horizon H, un troisième indicateur ID3 propre à se déplacer le long dudit horizon, et à indiquer la consigne-opérateur relative au lacet du véhicule LOP, et

- 5) sélectionner et valider à l'aide du manipulateur JOY, la consigne-opérateur relative au lacet LOP à l'aide des premier et second indicateurs ID1 et ID2.

Cette commande ne concerne que le déplacement transversal du véhicule. La consigne de vitesse VOP est ici générée de la même manière qu'un télépilotage par commande en vitesse de lacet (mode MOD4).

La commande en lacet MOD3 consiste ici en une consigne d'orientation de l'axe longitudinal du véhicule relativement à son orientation courante. Une telle approche permet de ne pas avoir besoin d'une information de cap véritable et absolue (magnétique ou géographique) au sein de l'installation.

L'orientation courante ID1 du véhicule est ici une information incrustée sur l'image vidéo. Elle est engendrée grâce aux informations de localisation émanant du véhicule.

En référence à la figure 14, le fonctionnement détaillé du mode MOD3 est le suivant :

l'opérateur visualise l'horizon virtuel H sur lequel sont indiqués le lacet courant du véhicule ID1 ainsi que l'indicateur ID2 qu'il peut faire évoluer avec son manipulateur. L'opérateur vise avec l'indicateur ID2 un point particulier du paysage vers lequel il souhaite se rendre, et valide la consigne ID3 ainsi définie avec la gâchette.

Chaque fois que la gâchette est actionnée, une nouvelle consigne de lacet ID3 est envoyée au véhicule et visualisée sur l'horizon H.

Le véhicule asservit le lacet du véhicule sur la consigne ID3, et dirige ainsi le véhicule dans la direction requise.

Cette commande est particulièrement adaptée à la progression hors contexte routier, par désignations successives d'amers dans un paysage.

Le domaine de désignation étant contraint par l'angle d'ouverture de la caméra, la pleine dynamique transversale ne peut pas être sollicitée en cas de situation imprévue.

Avantageusement, si l'opérateur maintient validée sa consigne de lacet (gâchette appuyée en permanence), la consigne devient une vitesse de lacet, permettant ainsi d'obtenir la pleine dynamique du véhicule.

C'est donc la gâchette, lors du déplacement du véhicule, qui permet de passer du mode de mobilité sur commande en vitesse de lacet au mode de mobilité sur commande en lacet et réciproquement.

Les mécanismes sécuritaires d'adaptation de vitesse décrits ci-avant sont toujours actifs dans ce mode de commande du véhicule.

Il est à remarquer qu'à certaine consigne-opérateur, ici VOP des modes de mobilité MOD4 et MOD3, parvenant au véhicule, est associée une validité spatiale.

Cette validité spatiale correspond à la validité d'une distance pour la consigne-opérateur associée VOP. Ainsi, en l'absence d'au moins une nouvelle consigne-opérateur VOP à l'issue du parcours de la distance de validité associée à la précédente consigne-opérateur, les moyens de commande du véhicule déclenchent l'arrêt du véhicule jusqu'à réception d'au moins une nouvelle consigne-opérateur.

Plus précisément, cette validité spatiale consiste en une distance dépendant de la valeur de la consigne-opérateur VOP. Cette validité spatiale est représentative de la confiance qu'a l'opérateur dans la trajectoire qu'il demande au véhicule (fonction de sa distance de visibilité courante).

Par exemple, l'ordre de grandeur de cette distance de référence pour une consigne de vitesse VOP de 1 m/sec est de l'ordre de 1 m, alors qu'elle est de 5 m pour une consigne de vitesse VOP de l'ordre de 22 m/sec.

Les problèmes transitoires de transmission des consignes-opérateur deviennent neutres pour le véhicule, qui peut ainsi franchir de petites zones de difficultés sans même adopter un comportement haché.

En cas de fort problème de transmission des consignes-opérateur, où il ne passe plus que quelques trames par minute, la réception d'une nouvelle et unique consigne-opérateur de vitesse non nulle pourra faire progresser le véhicule d'un bond d'autant plus grand que la consigne est élevée. Une telle progression par bond permet ainsi au véhicule de rejoindre une zone susceptible d'être plus propice à la réception et la communication des consignes-opérateur.

En référence à la figure 15, le mode de mobilité sur points de passage MOD1, en association avec la validité d'une consigne-opérateur relative à la vitesse longitudinale de croisière VOP comprend les étapes suivantes :

- désigner dans l'image visualisée une pluralité de points de passage P1, P2 formant une trajectoire-opérateur TJOP, le véhicule devant aller et s'arrêter au dernier point P2 de la trajectoire-opérateur;

- valider la totalité ou une partie de la trajectoire-opérateur TJOP ainsi désignée, et

- au niveau des moyens de commande-véhicule, élaborer les première et seconde consignes de référence CREF1 et CREF2 en fonction de la trajectoire-opérateur TJOP ainsi validée, et de la position courante du véhicule.

La validation des points est effective par l'intermédiaire de la gâchette. Le bouton MA en position "envoi" permet d'envoyer la totalité des points ainsi validés vers le véhicule. Le bouton en position "annulation" permet d'annuler l'un au moins des points de la trajectoire.

Dans le mode MOD1, le véhicule est asservi sur la trajectoire-opérateur TJOP en respectant une marge associée. Le véhicule est donc libre de passer où il veut tant que son écart à la trajectoire reste inférieur à cette marge d'asservissement.

Avantageusement, ce mode de mobilité MOD1 sur points de passage comprend en outre un comportement autonome du véhicule de type embardée.

Ce comportement autonome est dit action réflexe du type embardée. Il peut être automatique ou en réponse à la commande de l'opérateur, en vue d'éviter un obstacle le cas échéant.

Une embardée consiste, lors de la détection d'un obstacle sur la trajectoire immédiate du véhicule, à effectuer un écart EC (décidé et géré en cohérence avec le potentiel dynamique du véhicule) par rapport à la trajectoire-opérateur TJOP, de manière à éviter l'obstacle tout en respectant la marge spécifiée.

Il est à noter que ce comportement est indépendant de la forme de la trajectoire, qu'il s'agisse d'une ligne droite ou d'un virage.

Il s'agit là d'une action réflexe de guidage, qui va traiter la situation jusqu'à disparition du danger (obstacle dépassé) ou sa prise en compte par le niveau supérieur, qui va générer une nouvelle trajectoire libre de toute obstruction.

L'embardée automatique comporte quatre phases :

- si nécessaire, freinage sur la trajectoire-opérateur TJOP tant que l'embardée n'est pas décrétée possible;

- écart de trajectoire à vitesse stabilisée, dépendant de la taille de l'obstacle et de sa position par rapport à la trajectoire;

- maintien de l'écart jusqu'au dépassement de l'obstacle;

- retour à la trajectoire-opérateur d'origine, après dépassement.

Ce mode autonome nécessite l'équipement de moyens de détection au niveau du véhicule propres à détecter un obstacle sur la trajectoire-opérateur du véhicule.

Ces moyens de détection sont par exemple du type radar, capteur infra-rouge, capteur ultra-sonore, laser à balayage.

En complément du mode de mobilité sur points de passage MOD1, l'opérateur a la possibilité de réagir rapidement aux conditions de mobilité (apparition d'un événement particulier tel qu'un obstacle sur la trajectoire par exemple), en commandant une embardée-opérateur consistant en un écart en vitesse et/ou transversal par rapport aux consignes courantes utilisées par le véhicule.

Le véhicule interprète cette information de la même manière que lors d'une embardée déclenchée automatiquement à l'apparition d'un obstacle, et gère la dynamique de l'écart de manière sécurisée.

Ainsi, un obstacle apparaissant sur la trajectoire TJOP du véhicule (issu d'une suite de points de passage par exemple) est évité par l'opérateur qui spécifie simplement un écart-opérateur latéral EC tant qu'il n'est pas dépassé, et en annulant ensuite cet écart-opérateur pour reprendre la trajectoire d'origine.

Par exemple, pour l'écart de vitesse, il est prévu une pédale de frein dans le poste opérateur sur laquelle toute action provoque l'émission vers le véhicule d'une demande de réduction de la vitesse de croisière courante proportionnelle à l'intensité de l'action opérateur.

Pour les écarts de trajectoire, il est prévu d'utiliser le manipulateur à poignée dans son axe transversal associé à une prise en charge spécifique permettant de spécifier un écart proportionnel à celui imposé au manipulateur à poignée.

Il est clair que dans ce mode d'embardée sur opérateur, le dispositif ou servomécanisme d'adaptation de vitesse est aussi susceptible d'être appliqué.

Les moyens d'émission/réception des informations entre la station et le véhicule peuvent utiliser toute technologie, par exemple la technologie radiofréquence, la technologie filaire à fibre optique ou électrique, ou analogue.

**Revendications**

1. Système de commande des organes moteur et de direction d'un véhicule (VH) du type comprenant :

- des premiers moyens capteurs (CAP1) captant, et délivrant, en temps réel, un premier signal (S1) représentatif de la vitesse longitudinale courante du véhicule,

- des seconds moyens capteurs (CAP2) captant, et délivrant, en temps réel, un second signal (S2) représentatif du déplacement transversal courant du véhicule,

- des premiers moyens actionneurs (ACT1) de l'organe moteur en fonction d'une première consigne-actionneur longitudinale choisie (CACT1),

- des seconds moyens actionneurs (ACT2) de l'organe de direction en fonction d'une seconde consigne-actionneur transversale choisie (CACT2), et

- des moyens de commande-véhicule (COMV) recevant des première et seconde consignes de référence longitudinale et transversale (CREF1 et CREF2) en vue de commander respectivement les organes moteur et de direction et élaborant en temps réel, les première et seconde consigne-actionneur longitudinale et transversale (CACT1 et CACT2) selon un servomécanisme tenant compte des premier et second signaux captés (S1 et S2) et des première et seconde consignes de référence longitudinale et transversale reçues (CREF1 et CREF2),

**caractérisé en ce que** ledit servomécanisme, en réponse à une seconde consigne de référence transversale (CREF2) incompatible avec la vitesse longitudinale courante du véhicule (S1), adapte, en temps réel, et en couple avec une commande de l'organe de direction, la première consigne-actionneur longitudinale (CACT1) jusqu'à ce que la seconde consigne-actionneur transversale (CACT2) corresponde, le plus rapidement possible, à la seconde consigne de référence transversale (CREF2), ce qui permet de sécuriser, même à grande vitesse longitudinale, les déplacements longitudinal et transversal du véhicule.

2. Système selon la revendication 1, **caractérisé en ce que** le servomécanisme d'adaptation de vitesse comprend les étapes suivantes:

- a) calculer une première valeur maximale admissible (MAX1) pour la première consigne de référence (CREF1), selon une première loi (L1) dépendant des premier et second signaux captés (S1 et S2) et de caractéristiques relatives au véhicule (VH) et/ou à l'environnement dans lequel il se déplace,

- b) comparer la première valeur maximale admissible (MAX1) avec la première consigne de référence reçue (CREF1),

- c) en présence d'une première consigne de référence reçue (CREF1) inférieure à la première valeur maximale admissible calculée (MAX1), prendre en compte la première consigne de référence reçue (CREF1) comme première consigne-actionneur (CACT1), tandis qu'en présence d'une première consigne de référence reçue (CREF1) supérieure ou égale à la première valeur maximale admissible calculée, prendre en compte ladite première valeur calculée (MAX1) comme première consigne-actionneur (CACT1),

- d) calculer une seconde valeur maximale admissible (MAX2) pour la seconde consigne de référence (CREF2), selon une seconde loi (L2)

dépendant des premier et second signaux captés (S1 et S2) et des caractéristiques relatives au véhicule, et/ou à l'environnement dans lequel il se déplace,

- e) comparer la seconde valeur maximale admissible calculée (MAX2) avec la seconde consigne de référence reçue (CREF2),

- f) en présence d'une seconde consigne de référence reçue (CREF2) inférieure à la seconde valeur maximale admissible calculée (MAX2), prendre en compte la seconde consigne de référence reçue (CREF2) comme seconde consigne-actionneur (CACT2), tandis qu'en présence d'une seconde consigne de référence reçue (CREF2) supérieure ou égale à la seconde valeur calculée (MAX2), prendre en compte ladite seconde valeur calculée (MAX2) comme seconde consigne-actionneur (CACT2),

l'adaptation de la première consigne-actionneur (CACT1) étant réalisée à tout instant conformément aux étapes a) à c) jusqu'à ce que la seconde consigne-actionneur (CACT2) corresponde, le plus rapidement possible, à la seconde consigne de référence (CREF2) conformément aux étapes d) à f), tout en respectant certaines au moins des caractéristiques du véhicule et/ou de l'environnement dans lequel il se déplace.

3. Système selon la revendication 2, **caractérisé en ce qu'**en l'absence d'adaptation de vitesse longitudinale en cours, l'étape c) prévoit en outre, en présence d'une première consigne de référence reçue (CREF1) supérieure ou égale à la première valeur maximale admissible calculée (MAX1), de déclarer qu'une adaptation est en cours et d'initialiser la valeur de la précédente première consigne-actionneur (OLDCACT1) selon la première consigne-actionneur courante venant d'être déterminée (OLDCACT1=CACT1).

4. Système selon la revendication 3, **caractérisé en ce qu'**en présence d'une adaptation de vitesse en cours, l'étape b) comprend les étapes suivantes:

- b1) déterminer une valeur constante représentative de l'hystérésis du servomécanisme d'adaptation de vitesse (HYST1),

- b2) comparer la première valeur maximale admissible calculée et corrigée selon la valeur d'hystérésis prédéterminée (MAX1-HYST1) avec la première consigne de référence reçue (CREF1),

**en ce que** l'étape c) comprend l'étape suivante:

- c1) en présence d'une première consigne de référence reçue (CREF1) inférieure à ladite première valeur maximale admissible calculée et corrigée (MAX1-HYST1), prendre la première consigne de référence reçue (CREF1) comme première consigne-actionneur (CACT1) et déclarer la fin de l'adaptation, tandis qu'en présence d'une première consigne de référence reçue (CREF1) supérieure ou égale à la première valeur maximale admissible calculée et corrigée (MAX1-HYST1), prendre en compte comme première consigne-actionneur (CACT1) la valeur minimum choisie parmi le groupe formé par ladite première valeur maximum admissible calculée (MAX1), la première consigne de référence reçue (CREF1) et la précédente première consigne-actionneur (OLDCACT1), et initialiser la valeur de la précédente première consigne-actionneur à celle de la première consigne-actionneur courante (OLDCACT1=CACT1).

5. Système selon la revendication 2, **caractérisé en ce que** les caractéristiques relatives au véhicule (VH) sont choisies dans le groupe formé par les caractéristiques géométriques, morphologiques, dynamiques ou d'attitude du véhicule (VH), et les précédentes première et seconde consignes de référence reçues (CREF1 et CREF2).

6. Système selon la revendication 1, **caractérisé en ce que** les premiers moyens capteurs (CAP1) comprennent au moins un instrument choisi dans le groupe formé par un codeur sur arbre de transmission ou sur roue, un tachymètre, et analogue.

7. Système selon la revendication 1, **caractérisé en ce que** les seconds moyens capteurs (CAP2) comprennent au moins un instrument choisi dans le groupe formé par un codeur d'angle de roue, un potentiomètre d'angle de roue, et analogue.

8. Système selon la revendication 1, **caractérisé en ce que** les premiers moyens actionneurs (ACT1) comprennent au moins un organe choisi dans le groupe formé par une chaîne de commande du frein (ACT3), de l'accélérateur (ACT5), de la boîte de vitesse (ACT4), de la boîte de transfert, ou de la chaîne de transmission mécanique du véhicule, et analogue.

9. Système selon la revendication 1, **caractérisé en ce que** les seconds moyens actionneurs (ACT2) comprennent au moins un organe choisi dans le groupe formé par une chaîne de commande du volant du véhicule, et analogue.

10. Système selon la revendication 1, **caractérisé en ce que** les moyens de commande du véhicule (COMV) comprennent un calculateur embarqué.

11. Système selon l'une des revendication 1 à 10, **caractérisé en ce que** les moyens actionneurs (ACT1, ACT2), ainsi que les organes moteur et de direction du véhicule constituent des moyens actifs du véhicule propres à délivrer respectivement un signal (RCACT) représentatif de la position et/ou de l'état courant desdits moyens actifs, et **en ce qu'**il comprend en outre des moyens de réception des signaux délivrés par lesdits moyens actifs du véhicule.

12. Installation pour le guidage d'un véhicule (VH) par un opérateur (OP) embarqué ou non dans ledit véhicule, **caractérisée en ce que** le véhicule (VH) est équipé du système de commande selon l'une des revendications 1 à 11.

13. Installation selon la revendication 12, dans laquelle l'opérateur (OP) est situé dans une station distante (ST) du véhicule, **caractérisée en ce qu'**elle comprend, embarqués sur le véhicule (VH):

    - des moyens de commande-véhicule (COMV) propres à élaborer, à cadence choisie, les première et seconde consignes-actionneur (CACT1 et CACT2) en réponse aux première et seconde consignes de référence (CREF1 et CREF2) calculées au moins en partie à partir de consignes-opérateur (COP) émanant de l'opérateur, via la station,

    - des moyens de prises de vues (PV) pour enregistrer des images de l'environnement (IMG) dans lequel le véhicule (VH) se déplace, et

    - des moyens d'émission/réception-véhicule d'informations avec la station distante (ST), pour transmettre les images enregistrées à la station distante, ainsi que les informations délivrées par les moyens actifs et capteurs du véhicule et pour recevoir les consignes-opérateur (COP) émanant de l'opérateur via la station,

    **en ce qu'**elle comprend au niveau de la station distante (ST):

    - des moyens d'émission/réception-station d'informations avec le véhicule (VH), pour recevoir les images (IMG) transmises par le véhicule ainsi que les informations délivrées par les moyens actifs et capteurs du véhicule, et pour transmettre au véhicule les consignes-opérateur (COP),

    - des moyens de visualisation (VISU) des images ainsi reçues,

- des moyens de sélection et de validation (SEL) propres à sélectionner et valider au moins certaines consignes-opérateur (SGOP,VOP, VLOP,TJOP,LOP) relatives au déplacement du véhicule, à l'aide de l'image visualisée (IMG), et des informations provenant des moyens actifs et capteurs du véhicule, et

- des moyens de commande-station (COMS) propres à piloter les moyens de visualisation, les moyens de sélection et de validation, ainsi que les moyens d'émission/réception de la station.

**14.** Installation selon la revendication 13, **caractérisée en ce qu'**elle comprend en outre, embarqués dans le véhicule:

- des moyens de localisation (CAP4) du véhicule propres à capter et délivrer des informations (S4) relatives à la localisation du véhicule, et

dans la station distante:

- des moyens propres à générer sur l'image visualisée des informations relatives à la position courante du véhicule en fonction des informations de localisation ainsi reçues, en vue de participer à l'élaboration de certaines au moins des consignes-opérateur (SGOP,TJOP).

**15.** Installation selon la revendication 13, **caractérisée en ce que** les moyens de sélection (SEL) sont propres à sélectionner un mode de mobilité (MOD) prédéterminé du véhicule, choisi dans le groupe formé par le mode de mobilité sur points de passage (MOD1), le mode de mobilité sur segment (MOD2), le mode de mobilité sur commande en lacet (MOD3) et le mode de mobilité sur commande en vitesse de lacet (MOD4).

**16.** Installation selon la revendication 15, **caractérisée en ce que** chaque mode de mobilité (MOD) est exclusif, l'un par rapport à l'autre.

**17.** Installation selon la revendication 15, **caractérisée en ce que** les moyens de sélection et de validation (SEL) comprennent un clavier ou analogue (CLA) pour choisir le mode de mobilité (MOD) du véhicule.

**18.** Installation selon la revendication 15, **caractérisée en ce que** les moyens de sélection et de validation (SEL) comprennent un manipulateur à poignée (JOY) pour la sélection et la validation de certaines consignes-opérateur (VLOP,LOP,TJOP,SGOP) et une manette (MAN) associée à la sélection et la validation de la consigne-opérateur relative à la vitesse longitudinale de croisière du véhicule (VOP).

**19.** Installation selon les revendications 15 et 18, **caractérisée en ce que**, dans le mode de mobilité sur segment (MOD2) le manipulateur à poignée (JOY) comprend des moyens propres à désigner sur l'image visualisée un segment-opérateur (SGOP) de longueur variable, ayant des première (EX1) et seconde extrémités mobiles (EX2), l'extrémité mobile initiale (EX1) étant reliée à un point fixe (PF) de l'image correspondant à un point fixe choisi du véhicule et l'extrémité finale (EX2) définissant le point de l'environnement où le véhicule doit aller et s'arrêter.

**20.** Installation selon la revendication 19, **caractérisée en ce que** le mode de mobilité sur segment (MOD2) comprend, en association avec la sélection et la validation d'une consigne-opérateur relative à la vitesse longitudinale de croisière du véhicule (VOP), les étapes suivantes:

- i) au niveau de l'opérateur, sélectionner et valider sur l'image visualisée un segment-opérateur d'une longueur et orientation choisies (SGOP), et transmettre aux moyens de commande-véhicule (COMV), le segment-opérateur ainsi sélectionné et validé (SGOP), et

- ii) au niveau des moyens de commande-véhicule (COMV), calculer, à cadence choisie, les valeurs des différentes première et seconde consignes de référence (CREF1 et CREF2) en fonction des consignes-opérateur ainsi reçues (SGOP et VOP), et déterminer les première et seconde consignes-actionneur (CACT1 et CACT2) en fonction des première et seconde consignes de référence ainsi calculées (CREF1 et CREF2).

**21.** Installation selon la revendication 20, **caractérisée en ce que** le manipulateur à poignée est propre à être déplacé par l'opérateur selon un axe Y perpendiculaire à l'axe de déplacement longitudinal du véhicule, pour déplacer l'extrémité finale (EX2) du segment-opérateur (SGOP) selon l'axe Y, le segment-opérateur (SGOP) étant parallèle à l'axe longitudinal du véhicule.

**22.** Installation selon la revendication 20 ou la revendication 21, **caractérisée en ce que** le manipulateur à poignée est propre à être déplacé par l'opérateur selon un axe X parallèle à l'axe de déplacement longitudinal du véhicule, pour déplacer l'extrémité finale (EX2) du segment-opérateur (SGOP) selon l'axe X, le segment-opérateur (SGOP) étant parallèle à l'axe longitudinal du véhicule.

**23.** Installation selon l'une des revendication 20 à 22, **caractérisée en ce que** le manipulateur à poignée est propre à être tourné par l'opérateur par rapport à un axe Z perpendiculaire à l'axe de déplacement longitudinal du véhicule, pour appliquer une courbure aux extrémités initiale (EX1) et finale (EX2) du segment-opérateur (SGOP) par rapport à l'axe Z.

**24.** Installation selon la revendication 20, **caractérisée en ce que** l'étape i) comprend en outre l'étape qui consiste à déterminer une marge-opérateur accordée par l'opérateur au véhicule dans l'asservissement sur le segment-opérateur (SGOP) ainsi validé et **en ce que** l'étape ii) consiste à tenir compte de cette marge-opérateur dans l'asservissement du véhicule.

**25.** Installation selon les revendications 15 et 18, **caractérisée en ce que** dans le mode de mobilité sur commande en vitesse de lacet (MOD4), en association avec la sélection et la validation d'une consigne-opérateur relative à la vitesse longitudinale de croisière du véhicule (VOP), le manipulateur à poignée est propre à être déplacé par l'opérateur selon un axe Y perpendiculaire à l'axe de déplacement longitudinal du véhicule, pour appliquer une consigne-opérateur relative à la vitesse de lacet du véhicule (VLOP) dans une première plage de vitesse de lacet (PG1), tandis que le manipulateur est propre à être tourné par l'opérateur par rapport à un axe Z perpendiculaire à l'axe de déplacement longitudinal du véhicule, pour appliquer une consigne-opérateur relative à la vitesse de lacet (VLOP) dans une seconde plage de vitesse (PG2) différente de la première plage (PG1).

**26.** Installation selon les revendications 15 et 18, **caractérisée en ce que** le mode de mobilité sur commande en lacet (MOD3), en association avec la sélection et la validation d'une consigne-opérateur relative à la vitesse longitudinale de croisière du véhicule (VOP), comprend les étapes suivantes:

-   1) prévoir sur l'image visualisée, un axe formant horizon virtuel pour le véhicule dans l'environnement dans lequel il se déplace,

-   2) prévoir sur l'horizon, un premier indicateur (ID1) propre à se déplacer le long dudit horizon et à indiquer le lacet courant (LC) du véhicule sur ledit horizon,

-   3) prévoir sur l'horizon, un second indicateur (ID2) propre à se déplacer le long dudit horizon, et à indiquer le reflet de la position courante du manipulateur à poignée (JOY),

-   4) prévoir sur l'horizon, un troisième indicateur (ID3) propre à se déplacer le long dudit horizon, et à indiquer la consigne-opérateur relative au lacet du véhicule (LOP), et

-   5) sélectionner et valider à l'aide du manipulateur (JOY), la consigne-opérateur relative au lacet (LOP), à l'aide de la position des premier et second indicateurs (ID1 et ID2).

**27.** Installation selon les revendications 25 et 26, **caractérisée en ce que** le manipulateur à poignée (JOY) comprend des moyens permettant de passer, lors du déplacement du véhicule, du mode de mobilité sur commande en vitesse de lacet (MOD4) au mode de mobilité sur commande en lacet (MOD3) et réciproquement.

**28.** Installation selon les revendications 15 et 18, **caractérisée en ce que**, dans le mode de mobilité sur points de passage (MOD1), le manipulateur à poignée (JOY) comprend des moyens propres à désigner sur l'image visualisée au moins un point définissant le point de l'environnement où le véhicule doit aller et s'arrêter.

**29.** Installation selon la revendication 16, **caractérisée en ce que** le mode de mobilité sur points de passage (MOD1), en association avec la validation d'une consigne-opérateur relative à la vitesse longitudinale de croisière (VOP) comprend les étapes suivantes:

-   désigner dans l'image visualisée une pluralité de points de passage formant une trajectoire-opérateur (TJOP), le véhicule devant aller et s'arrêter au dernier point de la trajectoire-opérateur,

-   valider la totalité ou une partie de la trajectoire-opérateur (TJOP) ainsi désignée, et

-   au niveau des moyens de commande-véhicule (COMV), élaborer, à une cadence choisie, les différentes première et seconde consignes de référence (CREF1 et CREF2) en fonction de la trajectoire-opérateur (TJOP) ainsi validée, de cette trajectoire-opérateur (TJOP), et de la position courante du véhicule.

**30.** Installation selon la revendication 15, **caractérisée en ce** le mode de mobilité sur points de passage, comprend en outre un comportement autonome du véhicule du type embardée, mis en place automatiquement ou en réponse à une commande de l'opérateur, en vue d'éviter un obstacle le cas échéant.

**31.** Installation selon la revendication 30, **caractérisée en ce que** le comportement autonome sur embardée automatique comprend les étapes suivantes:

- prévoir des moyens de détection propres à détecter un obstacle sur la trajectoire-opérateur (TJOP) du véhicule,

- effectuer un écart par rapport à la trajectoire-opérateur du véhicule de manière à éviter l'obstacle ainsi détecté, tout en respectant la marge-opérateur, l'écart étant réalisé à une vitesse longitudinale compatible avec les caractéristiques du véhicule et/ou de l'environnement dans lequel il se déplace,

- maintenir l'écart jusqu'au dépassement de l'obstacle, et

- retourner à la trajectoire-opérateur (TJOP) du véhicule.

32. Installation selon la revendication 30, **caractérisé en ce que** le comportement autonome sur embardée opérateur comprend les étapes suivantes:

- sur l'image visualisée, par l'opérateur, en réponse à un événement choisi, déterminer un écart-opérateur par rapport à la trajectoire-opérateur (TJOP),

- élaborer les différentes première et seconde consignes de référence (CREF1 et CREF2), à cadence choisie, en tenant compte de cet écart-opérateur et de la position courante du véhicule par rapport à cette trajectoire-opérateur (TJOP).

33. Installation selon la revendication 13, **caractérisée en ce que** les moyens d'émission/réception de la station et du véhicule communiquent entre eux selon une technologie de communication appropriée choisie dans le groupe formé par la technologie radiofréquence, la technologie filaire à fibre optique ou électrique, et analogue.

34. Installation selon la revendication 14, **caractérisée en ce qu'**à certaine consigne-opérateur (VOP) de certain mode de mobilité (MOD3, MOD4) est associée une distance de validité correspondant à la validité spatiale de ladite consigne-opérateur, et **en ce qu'**en cas d'absence d'au moins une nouvelle consigne-opérateur à l'issue du parcours de la distance de validité, les moyens de commande-véhicule (COMV) déclenchent l'arrêt du véhicule jusqu'à réception d'au moins une nouvelle consigne-opérateur.

35. Procédé de commande d'un véhicule mis en oeuvre par le système selon l'une des revendications 1 à 11.

36. Procédé de guidage d'un véhicule mis en oeuvre par une installation selon l'une des revendications 12 à 34.

**Claims**

1. Control system for the engine and steering devices of a vehicle (VH), of the type comprising:

- first sensor means (CAP1) sensing and providing, in real time, a first signal (S1) representative of the current longitudinal speed of the vehicle,
- second sensor means (CAP2) sensing and providing, in real time, a second signal (S2) representative of the current transverse displacement of the vehicle,
- first means of actuating (ACT1) the engine device according to a chosen first longitudinal actuating instruction (CACT1),
- second means of actuating (ACT2) the steering device according to a chosen second transverse actuating instruction (CACT2), and
- vehicle control means (COMV) receiving first and second, longitudinal and transverse, reference instructions (CREF1 and CREF2) for the purpose of controlling the driving and steering devices respectively and generating, in real time, the first and second, longitudinal and transverse, actuating instructions (CACT1 and CACT2) according to a servomechanism taking account of the first and second sensed signals (S1 and S2) and of the received first and second longitudinal and transverse reference instructions (CREF1 and CREF2),

**characterized in that** the said servomechanism, in response to a second transverse reference instruction (CREF2) incompatible with the current longitudinal speed of the vehicle (S1) adjusts, in real time and in conjunction with a control of the steering device, the first longitudinal actuating instruction (CACT1) until the second transverse actuating instruction (CACT2) corresponds, as quickly as possible, with the second transverse reference instruction (CREF2), which makes it possible, even at high longitudinal speeds, to keep the longitudinal and transverse movements of the vehicle safe.

2. System according to Claim 1, **characterized in that** the speed adjusting servomechanism comprises the following steps:

- a) calculating a first maximum permissible value (MAX1) for the first reference instruction (CREF1), according to a first law (L1) depending on the first and second sensed signals (S1 and S2) and on characteristics relating to the vehicle (VH) and/or to the environment in which it is moving,

- b) comparing the first maximum permissible value (MAX1) with the received first reference instruction (CREF1),
- c) in the presence of a first received reference instruction (CREF1) less than the calculated first maximum permissible value (MAX1), taking into account the received first reference instruction (CREF1) as a first actuating instruction (CACT1), whereas in the presence of a received first reference instruction (CREF1) greater than or equal to the first calculated maximum permissible value, taking into account the said calculated first value (MAX1) as a first actuating instruction (CACT1),
- d) calculating a second maximum permissible value (MAX2) for the second reference instruction (CREF2) according to a second law (L2) depending on the first and second sensed signals (S1 and S2) and on characteristics relating to the vehicle and/or to the environment in which it is moving,
- e) comparing the calculated second maximum permissible value (MAX2) with the received second reference instruction (CREF2),
- f) in the presence of a received second reference instruction (CREF2) less than the calculated second maximum permissible value (MAX2), taking into account the received second reference instruction (CREF2) as a second actuating instruction (CACT2), whereas in the presence of a received second reference instruction (CREF2) greater than or equal to the calculated second value (MAX2), taking into account the said calculated second value (MAX2) as a second actuating instruction (CACT2),

the adjustment of the first actuating instruction (CACT1) being carried out at all times in accordance with steps a) to c) until the second actuating instruction (CACT2) corresponds, as quickly as possible, to the second reference instruction (CREF2) in accordance with steps d) to f), whilst complying with at least some of the characteristics of the vehicle and/or of the environment in which it is moving.

3. System according to Claim 2, **characterized in that** in the absence of adjustment of longitudinal speed in progress, step c) furthermore provides, in the presence of a received first reference instruction (CREF1) greater than or equal to the calculated first maximum permissible value (MAX1), for declaring that an adjustment is in progress and initializing the value of the preceding first actuating instruction (OLDCACT1) according to the first current actuating instruction that has just been determined (OLDCACT1=CACT1).

4. System according to Claim 3, **characterized in that** in the presence of a speed adjustment in progress, step b) comprises the following steps:

- b1) determining a constant value representative of the hysteresis of the speed adjusting servomechanism (HYST1),
- b2) comparing the first maximum permissible value, calculated and corrected according to the predetermined hysteresis value (MAX1-HYST1) with the received first reference instruction (CREF1),

**in that** step c) comprises the following step:

- c1) in the presence of a received first reference instruction (CREF1) less than the said calculated and corrected first maximum permissible value (MAX1-HYST1), taking the received first reference instruction (CREF1) as the first actuating instruction (CACT1) and declaring the end of the adjustment, whereas in the presence of a received first reference instruction (CREF1) greater than or equal to the first calculated and corrected maximum permissible value (MAX1-HYST1), taking into account as the first actuating instruction (CACT1) the minimum value chosen from the group formed by the said calculated first maximum permissible value (MAX1), the received first reference instruction (CREF1) and the preceding first actuating instruction (OLDCACT1), and initializing the value of the preceding first actuating instruction to that of the current first actuating instruction (OLDCACT1=CACT1).

5. System according to Claim 2, **characterized in that** the characteristics relating to the vehicle (VH) are chosen from the group formed by the geometric, morphological, dynamic or attitude characteristics of the vehicle (VH), and the preceding received first and second reference instructions (CREF1 and CREF2).

6. System according to Claim 1, **characterized in that** the first sensor means (CAP1) comprise at least one instrument chosen from the group formed by a coder on a transmission shaft or on a wheel, a tachometer, and similar.

7. System according to Claim 1, **characterized in that** the second sensor means (CAP2) comprise at least one instrument chosen from the group formed by a wheel angle coder, a wheel angle potentiometer, and similar.

8. System according to Claim 1, **characterized in that** the first actuating means (ACT1) comprise at least one device chosen from the group formed by a control system for the brake (ACT3), the accelerator (ACT5), the gearbox (ACT4), the transfer unit or for the mechanical transmission system of the vehicle, and similar.

9. System according to Claim 1, **characterized in that** the second actuating means (ACT2) comprise at least one device chosen from the group formed by a control system for the steering wheel of the vehicle, and similar.

10. System according to Claim 1, **characterized in that** the control means of the vehicle (COMV) comprise an on-board calculator.

11. System according to one of Claims 1 to 10, **characterized in that** the actuating means (ACT1, ACT2) and the engine and steering devices of the vehicle constitute active means of the vehicle capable of providing, respectively, a signal (RCACT) representative of the position and/or of the current status of the said active means, and **in that** it furthermore comprises means of receiving the signals provided by the said active means of the vehicle.

12. Installation for the guidance of a vehicle (VH) by an operator (OP) present or not present in the said vehicle, **characterized in that** the vehicle (VH) is equipped with the control system according to one of Claims 1 to 11.

13. Installation according to Claim 12, wherein the operator (OP) is located in a station (ST) remote from the vehicle, **characterized in that** it comprises, installed in the vehicle (VH):

   - vehicle control means (COMV) capable of generating, at a chosen rate, the first and second actuating instructions (CACT1 and CACT2) in response to the first and second reference instructions (CREF1 and CREF2) calculated at least partly from operator instructions (COP) coming from the operator, via the station,
   - image taking means (PV) for recording images of the environment (IMG) in which the vehicle (VH) is moving and
   - vehicle transmission/reception means for data exchange with the remote station (ST) for transmitting the recorded images to the remote station, and the information provided by the active means and sensors of the vehicle and for receiving the operator instructions (COP) coming from the operator via the station,

**in that** it comprises in the remote station (ST):

   - station transmission/reception means for data exchange with the vehicle (VH) for receiving the images (IMG) transmitted by the vehicle and the information provided by the active means and sensors of the vehicle, and for transmitting the operator instructions (COP) to the vehicle,
   - means of displaying (VISU) the images thus received,
   - means of selection and validation (SEL) capable of selecting and validating at least some operator instructions (SGOP, VOP, VLOP, TJOP, LOP) relating to the movement of the vehicle, with the help of the displayed image (IMG) and of the information coming from the active means and sensors of the vehicle, and
   - station control means (COMS) capable of controlling the display means, the selection and validation means and the transmission/reception means of the station.

14. Installation according to Claim 13, **characterized in that** it furthermore comprises, installed in the vehicle:

   - means of locating (CAP4) the vehicle capable of sensing and providing information (S4) relating to the location of the vehicle, and

   in the remote station:

   - means capable of generating, on the displayed image, information relating to the current position of the vehicle according to the location information thus received, for the purpose of participating in the generation of at least some of the operator instructions (SGOP, TJOP).

15. Installation according to Claim 13, **characterized in that** the selection means (SEL) are capable of selecting a predetermined mobility mode (MOD) of the vehicle, chosen from the group formed by the mobility on points of passage mode (MOD1), the mobility on segment mode (MOD2), the mobility on yaw control mode (MOD3) and the mobility on yaw speed control mode (MOD4).

16. Installation according to Claim 15, **characterized in that** each mobility mode (MOD) is exclusive with respect to the others.

17. Installation according to Claim 15, **characterized in that** the selection and validation means (SEL) comprise a keyboard or similar (CLA) for choosing the mobility mode (MOD) of the vehicle.

18. Installation according to Claim 15, **characterized in that** the selection and validation means (SEL) comprise a joystick (JOY) for selecting and validating some operator instructions (VLOP, - LOP, TJOP, SGOP) and a hand lever (MAN) associated with the selection and validation of the operator instruction relating to the longitudinal cruising speed of the vehicle (VOP).

19. Installation according to Claims 15 and 18, **characterized in that**, in the mobility on segment mode (MOD2) the joystick (JOY) comprises means capable of designating an operator segment (SGOP), of variable length, on the displayed image, having first (EX1) and second (EX2) movable ends, the initial movable end (EX1) being connected to a fixed point (PF) of the image corresponding to a chosen fixed point of the vehicle and the final end (EX2) defining the point in the environment to which the vehicle must go and at which it must stop.

20. Installation according to Claim 19, **characterized in that** the mobility on segment mode (MOD2) comprises, in association with the selection and verification of an operator instruction relating to the longitudinal cruising speed of the vehicle (VOP), the following steps:

   - i) at the operator level, selecting and validating on the displayed image an operator segment of a chosen length and orientation (SGOP), and transmitting to the vehicle control means (COMV) the operator segment thus selected and validated (SGOP), and
   - ii) at vehicle control means (COMV) level, calculating, at a chosen rate, the values of the different first and second reference instructions (CREF1 and CREF2) according to the operator instructions thus received (SGOP and VOP), and determining the first and second actuating instructions (CACT1 and CACT2) according to the first and second reference instructions thus calculated (CREF1 and CREF2).

21. Installation according to Claim 20, **characterized in that** the joystick is capable of being moved by the operator along an axis Y perpendicular to the axis of longitudinal movement of the vehicle, in order to move the final end (EX2) of the operator segment (SGOP) along the Y axis, the operator segment (SGOP) being parallel with the longitudinal axis of the vehicle.

22. Installation according to Claim 20 or Claim 21, **characterized in that** the joystick is capable of being moved by the operator along an axis X parallel with the axis of longitudinal movement of the vehicle, in order to move the final end (EX2) of the operator segment (SGOP) along the X axis, the operator segment (SGOP) being parallel with the longitudinal axis of the vehicle.

23. Installation according to one of Claims 20 to 22, **characterized in that** the joystick is capable of being rotated by the operator with respect to an axis Z perpendicular to the axis of longitudinal movement of the vehicle, in order to apply a curvature to the initial (EX1) and final (EX2) ends of the operator segment (SGOP) with respect to the Z axis.

24. Installation according to Claim 20, **characterized in that** step i) furthermore comprises the step which consists in determining an operator margin assigned by the operator to the vehicle in the servo-control over the operator segment (SGOP) thus validated and **in that** step ii) consists in taking account of this operator margin in the servo-control of the vehicle.

25. Installation according to Claims 15 and 18, **characterized in that** in the mobility on yaw speed control mode (MOD4), in association with the selection and validation of an operator instruction relating to the longitudinal cruising speed of the vehicle (VOP), the joystick is capable of being moved by the operator along an axis Y perpendicular to the longitudinal axis of movement of the vehicle, in order to apply an operator instruction relating to the yaw speed of the vehicle (VLOP) in a first range of yaw speed (PG1), whereas the joystick is capable of being rotated by the operator with respect to an axis Z perpendicular to the axis of longitudinal movement of the vehicle, in order to apply an operator instruction relating to the yaw speed (VLOP) in a second speed range (PG2) different from the first range (PG1).

26. Installation according to Claims 15 and 18, **characterized in that** the mobility on yaw control mode (MOD3), in association with the selection and validation of an operator instruction relating to the longitudinal cruising speed of the vehicle (VOP), comprises the following steps:

   - 1) providing, on the displayed image, a line forming a virtual horizon for the vehicle in the environment in which it is moving,
   - 2) providing, on the horizon, a first indicator (ID1) capable of moving along the said horizon and of indicating the current yaw (LC) of the vehicle on the said horizon,
   - 3) providing, on the horizon, a second indicator (ID2) capable of moving along the said horizon and giving an indication of the current position of the joystick (JOY),

- 4) providing, on the horizon, a third indicator (ID3) capable of moving along the said horizon and of indicating the operator instruction relating to the yaw of the vehicle (LOP), and
- 5) selecting and validating with the joystick (JOY), the operator instruction relating to yaw (LOP), with the help of the positions of the first and second indicators (ID1 and ID2).

27. Installation according to Claims 25 and 26, **characterized in that** the joystick (JOY) comprises means making it possible to change, during the movement of the vehicle, from the mobility on yaw speed control mode (MOD4) to the mobility on yaw control mode (MOD3) and vice-versa.

28. Installation according to Claims 15 and 18, **characterized in that**, in the mobility on points of passage mode (MOD1), the joystick (JOY) comprises means capable of designating on the displayed image at least one point defining the point in the environment to which the vehicle must go and at which it must stop.

29. Installation according to Claim 16, **characterized in that** the mobility on points of passage mode (MOD1), in association with the validation of an operator instruction relating to the longitudinal cruising speed (VOP) comprises the following steps:

- designating, in the displayed image, a plurality of points of passage forming an operator trajectory (TJOP), the vehicle having to go to and stop at the last point of the operator trajectory,
- validating the totality or a part of the operator trajectory (TJOP) thus designated, and
- at vehicle control means. (COMV), generating, at a chosen rate, the different first and second reference instructions (CREF1 and CREF2) according to the operator trajectory (TJOP) thus validated, of this operator trajectory (TJOP), and according to the current position of the vehicle.

30. Installation according to Claim 15, **characterized in that** the mobility on points of passage mode furthermore comprises an autonomous behaviour of the vehicle of the swerving type, established automatically or in response to an operator command, for the purpose of avoiding an obstacle if necessary.

31. Installation according to Claim 30, **characterized in that** the autonomous behaviour over an automatic swerve comprises the following steps:

- providing means of detection capable of detecting an obstacle in the operator trajectory (TJOP) of the vehicle,

- carrying out a deviation with respect to the operator trajectory of the vehicle in such a way as to avoid the obstacle thus detected, whilst complying with the operator margin, the deviation being carried out at a longitudinal speed compatible with the characteristics of the vehicle and/or of the environment in which it is moving,
- maintaining the deviation until the obstacle is passed, and
- returning to the operator trajectory (TJOP) of the vehicle.

32. Installation according to Claim 30, **characterized in that** the autonomous behaviour of the vehicle over an operator swerve comprises the following steps:

- on the image displayed, by the operator in response to a chosen event, determining an operator deviation with respect to the operator trajectory (TJOP),
- generating the different first and second reference instructions (CREF1 and CREF2), at a chosen rate, taking account of this operator deviation and of the current position of the vehicle with respect to this operator trajectory (TJOP).

33. Installation according to Claim 13, **characterized in that** the transmission/reception means of the station and of the vehicle communicate with each other using an appropriate communication technology chosen from the group formed by radio-frequency technology, hard-wired electrical or fibre optic technology, and similar.

34. Installation according to Claim 14, **characterized in that** with a certain operator instruction (VOP) of a certain mobility mode (MOD3, MOD4) there is associated a validity distance corresponding to the spatial validity of the said operator instruction, and **in that** in the case of absence of at least one new operator instruction at the end of travelling over the validity distance, the vehicle control means (COMV) initiate the stopping of the vehicle until at least one new operator instruction is received.

35. Method of controlling a vehicle used by the system according to one of Claims 1 to 11.

36. Method of guiding a vehicle used by an installation according to one of Claims 12 to 34.

**Patentansprüche**

1. Steuersystem für die Antriebs- und Lenkorgane eines Fahrzeugs (VH) enthaltend:

erste Aufnehmereinrichtungen (CAP1), die in Echtzeit ein erstes Signal (S1) aufnehmen und abgeben, das für die augenblickliche Längsgeschwindigkeit des Fahrzeugs repräsentativ ist,

zweite Aufnehmereinrichtungen (CAP2), die in Echtzeit ein zweites Signal (S2) aufnehmen und abgeben, das für die augenblickliche Quergeschwindigkeit des Fahrzeugs repräsentativ ist,

erste Stelleinrichtungen (ACT1) für das Antriebsorgan in Abhängigkeit von einem ersten gewählten Längs-Stellgliedeinstellwert (CACT1),

zweite Stelleinrichtungen (ACT2) für das Lenkorgan in Abhängigkeit von einem zweiten gewählten Quer-Stellgliedeinstellwert (CACT2), und

Fahrzeugsteuereinrichtungen (COMV), die erste und zweite Längs- und QuerBezugseinstellwerte (CREF1 und CREF2) empfangen, um die Antriebs- und Lenkorgane anzusteuern, und die in Echtzeit die ersten und zweiten Längs- und Quer-Stellgliedeinstellwerte (CACT1 und CACT2) entsprechend einem Servomechanismus bearbeiten, der die ersten und zweiten aufgenommenen Signale (S1 und S2) und die ersten und zweiten empfangenen Längs- und Quer-Bezugseinstellwerte (CREF1 und CREF2) berücksichtigt,

**dadurch gekennzeichnet, dass** der genannte Servomechanismus in Abhängigkeit von einem zweiten Quer-Bezugseinstellwert (CREF2), der mit der augenblicklichen Längsgeschwindigkeit des Fahrzeugs (S1) unverträglich ist, in Echtzeit und zusammen mit einem Richtungssteuerorgan den ersten Längs-Stellgliedeinstellwert (CACT1) verändert, bis der zweite Quer-Stellgliedeinstellwert (CACT2) so schnell wie möglich mit dem zweiten Quer-Bezugseinstellwert (CREF2) übereinstimmt, was es erlaubt, selbst bei großer Längsgeschwindigkeit die Längs- und Querbewegungen des Fahrzeugs sicher zu machen.

2. System nach Anspruch 1, **dadurch gekennzeichnet, dass** der Servomechanismus zur Anpassung der Geschwindigkeit die folgenden Schritte ausführt:

a) Berechnen eines ersten zulässigen Maximalwerts (MAX1) für den ersten Bezugseinstellwert (CREF1) nach einem ersten Gesetz (L1) in Abhängigkeit von den ersten und zweiten Aufnehmersignalen (S1 und S2) und von Eigenschaften, die sich auf das Fahrzeug (VH) und/oder auf die Umgebung, in der es sich bewegt, beziehen,

b) Vergleichen des ersten zulässigen Maximalwerts (MAX1) mit dem ersten empfangenen Bezugseinstellwert (CREF1),

c) bei Anwesenheit eines ersten empfangenen Bezugseinstellwerts (CREF1), der kleiner als der berechnete, erste zulässige Maximalwert (MAX1) ist, Berücksichtigen des ersten empfangenen Bezugseinstellwerts (CREF1) als ersten Stellgliedeinstellwert (CACT1), hingegen bei Anwesenheit eines ersten empfangenen Bezugseinstellwerts (CREF1), der größer oder gleich dem berechneten, ersten zulässigen Maximalwert ist, Berücksichtigen des genannten berechneten ersten Werts (MAX1) als ersten Stellgliedeinstellwert (CACT1),

d) Berechnen eines zweiten zulässigen Maximalwerts (MAX2) für den zweiten Bezugseinstellwert (CREF2) nach einem zweiten Gesetz (L2) in Abhängigkeit von den ersten und zweiten aufgenommenen Signalen (S1 und S2) und von Eigenschaften, die sich auf das Fahrzeug und/oder auf die Umgebung, in der es sich bewegt, beziehen,

e) Vergleichen des berechneten zweiten zulässigen Maximalwerts (MAX2) mit dem zweiten empfangenen Bezugseinstellwert (CREF2),

f) bei Anwesenheit eines zweiten empfangenen Bezugseinstellwerts (CREF2), der kleiner als der berechnete zweite zulässige Maximalwert (MAX2) ist, Berücksichtigen des zweiten empfangenen Bezugseinstellwerts (CREF2) als zweiten Stellgliedeinstellwert (CACT2), hingegen bei Anwesenheit eines empfangenen zweiten Bezugseinstellwerts (CREF2), der größer oder gleich dem berechneten zweiten Maximalwert (MAX2) ist, Berücksichtigen des berechneten zweiten Wertes (MAX2) als zweiten Stellgliedeinstellwert (CACT2),

wobei die Anpassung des ersten Stellgliedeinstellwerts (CACT1) in jedem Augenblick entsprechend den Schritten a) bis c) durchgeführt wird, bis der zweite Stellgliedeinstellwert (CACT2) schnellstmöglich dem zweiten Bezugseinstellwert (CREF2) entsprechend den Schritten d) bis f) entspricht, wobei immer wenigstens einige der Eigenschaften des Fahrzeugs und/oder der Umgebung, in der es sich bewegt, beachtet werden.

3. System nach Anspruch 2, **dadurch gekennzeich-**

**net, dass** bei Fehlen der Anpassung der augenblicklichen Längsgeschwindigkeit der Schritt c) weiterhin bei Anwesenheit eines empfangenen ersten Bezugseinstellwerts (CREF1), der größer oder gleich dem berechneten ersten Maximalwert (MAX1) ist, vorgesehen ist zu melden, dass eine Anpassung gerade ausgeführt wird, und die Größe des vorangehenden ersten Stellgliedeinstellwerts (OLDCACT1) gemäß dem laufenden ersten Stellgliedeinstellwert, der gerade bestimmt worden ist (OLDCACT1=CACT1), zu initialisieren.

4.   System nach Anspruch 3, **dadurch gekennzeichnet, dass** bei Anwesenheit einer augenblicklichen Geschwindigkeitsanpassung der Schritt b) die folgenden Schritte umfasst:

      b1) Bestimmen eines konstanten Wertes, der für die Hysterese des Servomechanismus zur Anpassung der Geschwindigkeit (HYST1) repräsentativ ist,

      b2) Vergleichen des errechneten ersten zulässigen Maximalwerts, der gemäß dem vorbestimmten Hysteresewert korrigiert ist (MAX1-HYST1), mit dem empfangenen ersten Bezugseinstellwert (CREF1),

und dass der Schritt c) den folgenden Schritt umfasst:

      c1) bei Anwesenheit eines empfangenen ersten Bezugseinstellwerts (CREF1), der kleiner als der berechnete und korrigierte erste zulässige Maximalwert (MAX1-HYST1) ist, Verwenden des empfangenen ersten Bezugseinstellwerts (CREF1) als ersten Stellgliedeinstellwert (CACT1) und Melden des Endes der Anpassung, hingegen bei Anwesenheit eines empfangenen ersten Bezugseinstellwerts (CREF1), der größer oder gleich dem berechneten und korrigierten ersten zulässigen Maximalwert (MAX1-HYST1) ist, Verwenden als ersten Stellgliedeinstellwert (CACT1) des Minimalwerts, der aus der Gruppe ausgewählt ist, die von dem genannten berechneten ersten zulässigen Maximalwert (MAX1), dem empfangenen ersten Bezugseinstellwert (CREF1) und dem vorangehenden ersten Stellgliedeinstellwert (OLDCACT1) gebildet ist, und Initialisieren der Größe des vorangehenden ersten Stellgliedeinstellwerts als diejenige des laufenden ersten Stellgliedeinstellwerts (OLDCACT1=CACT1).

5.   System nach Anspruch 2, **dadurch gekennzeichnet, dass** die sich auf das Fahrzeug (VH) beziehenden Eigenschaften aus der Gruppe ausgewählt sind, die gebildet ist von den geometrischen, den morphologischen und dynamischen Eigenschaften oder vom Verhalten des Fahrzeugs (VH) und von den vorangehenden empfangenen ersten und zweiten Bezugseinstellwerten (CREF1 und CREF2).

6.   System nach Anspruch 1, **dadurch gekennzeichnet, dass** die ersten Aufnehmereinrichtungen (CAP1) wenigstens ein Instrument enthalten, das aus der Gruppe ausgewählt ist, die von einem Kraftübertragungswellen- oder Radcodierer, einem Tachometer und dergleichen gebildet ist.

7.   System nach Anspruch 1, **dadurch gekennzeichnet, dass** die zweiten Aufnehmereinrichtungen (CAP2) wenigstens ein Instrument enthalten, das aus der Gruppe ausgewählt ist, die einen Radlenkwinkelcodierer, ein Radlenkwinkelpotentiometer und dergleichen enthält.

8.   Vorrichtung nach Anspruch 1, **dadurch gekennzeichnet, dass** die ersten Stellgliedeinrichtungen (AKT1) wenigstens ein Organ enthalten, das aus der Gruppe ausgewählt ist, die gebildet ist von einem Steuerzug für die Bremsen (AKT3), das Gaspedal (AKT5), das Schaltgetriebe (AKT4), das Verteilergetriebe oder den mechanischen Antriebsstrang des Fahrzeugs und dergleichen.

9.   System nach Anspruch 1, **dadurch gekennzeichnet, dass** die zweiten Stellgliedeinrichtungen (AKT2) wenigsten ein Organ enthalten, das aus der Gruppe ausgewählt ist, die von einem Steuerzug des Fahrzeuglenkrads und dergleichen gebildet ist.

10.   System nach Anspruch 1, **dadurch gekennzeichnet, dass** die Fahrzeugsteuereinrichtungen (COMV) einen Bordrechner enthalten.

11.   System nach einem der Ansprüche 1 bis 10, **dadurch gekennzeichnet, dass** die Stellgliedeinrichtungen (AKT1, AKT2) sowie die Antriebs- und Lenkorgane des Fahrzeugs aktive Einrichtungen des Fahrzeugs bilden, die dazu dienen, jeweils ein Signal (RCACT) zu liefern, das für die Stellung und/oder den laufenden Zustand der genannten Einrichtungen repräsentativ ist, und dass weiterhin Empfangseinrichtungen für die von den genannten aktiven Einrichtungen des Fahrzeugs gelieferten Signale vorgesehen sind.

12.   Anlage zur Führung eines Fahrzeugs (VH) durch einen Fahrzeugführer (OP), der im Fahrzeug sitzt, oder nicht, **dadurch gekennzeichnet, dass** das Fahrzeug (VH) mit einem Steuersystem nach einem der Ansprüche 1 bis 12 versehen ist.

**13.** Anlage nach Anspruch 12, bei der der Fahrzeugführer (OP) sich in einer vom Fahrzeug entfernten Station (ST) befindet, **dadurch gekennzeichnet, dass** sie an Bord des Fahrzeugs (VH) aufweist:

- Fahrzeugsteuereinrichtungen (COMV) zum Erstellen der ersten und zweiten Stellglied-Einstellwerte (CACT1 und CACT2) in gewählter Folge in Abhängigkeit von den ersten und zweiten berechneten Bezugseinstellwerten (CREF1 und CREF2) wenigstens teilweise aus den Fahrzeugführer-Einstellwerten (COP), die über die Station vom Fahrzeugführer ausgehen,

- Bildaufnahmeeinrichtungen (PV) zum Speichern von Bildern (IMG) der Umgebung, in der sich das Fahrzeug (VH) bewegt, und

- Fahrzeugsende-/Empfangseinrichtungen für den Informationsaustausch mit der entfernten Station (ST) zum Senden der gespeicherten Bilder sowie der von den aktiven Einrichtungen und Aufnehmern des Fahrzeugs gelieferten Informationen zur entfernten Station und zum Empfangen der Fahrzeugführer-Einstellwerte (COP), die vom Fahrzeugführer über die Station ausgehen,

und **dass** sie auf Seiten der entfernten Station (ST) enthält:

- Stationssende-/Empfangseinrichtungen für den Informationsaustausch mit dem Fahrzeug (VH) um die von dem Fahrzeug gesendeten Bilder (IMG) sowie die von den aktiven Einrichtungen und Aufnehmern des Fahrzeugs gelieferten Informationen zu empfangen und um die Fahrzeugführer-Einstellwerte (COP) zum Fahrzeug zu senden,

- Anzeigeeinrichtungen (VISU) für die so empfangenen Bilder,

- Auswähl- und Freigabeeinrichtungen (SEL), die dazu dienen, wenigstens einige Fahrzeugführer-Einstellwerte (SGOP, VOP, VLOP, TJOP, LOP) auszuwählen und freizugeben, die sich auf die Bewegung des Fahrzeugs beziehen, mit Hilfe des angezeigten Bildes (ING) und von Informationen, die von den aktiven Einrichtungen und Aufnehmern des Fahrzeugs stammen und

Stationssteuereinrichtungen (COMS) zum Steuern der Anzeigeeinrichtungen, der Auswähl- und Freigabeeinrichtungen sowie der Sende-/Empfangseinrichtungen der Station.

**14.** Anlage nach Anspruch 13, **dadurch gekennzeichnet, dass** sie weiterhin umfasst:

an Bord des Fahrzeugs:

- Fahrzeug-Ortsbestimmungseinrichtungen (CAP4), die dazu dienen, Informationen (S4), die sich auf den Fahrzeugort beziehen, aufzunehmen und zu liefern, und

in der entfernten Station:

- Einrichtungen, die dazu dienen, auf dem angezeigten Bild Informationen zu erzeugen, die sich auf die laufende Position des Fahrzeugs beziehen, als Funktion der so empfangenen Ortsinformationen, um bei der Erstellung wenigstens einiger der Fahrzeugführer-Einstellwerte (SGOP, TJOP) teilzunehmen.

**15.** Anlage nach Anspruch 13, **dadurch gekennzeichnet, dass** die Auswähleinrichtungen (SEL) dazu eingerichtet sind, eine vorbestimmte Bewegungsart (MOD) des Fahrzeugs zu wählen, die aus der Gruppe ausgewählt ist, die gebildet ist von der Bewegungsart nach Zielpunkten (MOD1), Bewegungsart nach Bogensegmenten (MOD2), Bewegungsart nach Kurvensteuerung (MOD3) und Bewegungsart nach Kurvengeschwindigkeitssteuerung (MOD4).

**16.** Anlage nach Anspruch 15, **dadurch gekennzeichnet, dass** jede Bewegungsart (MOD) gegenüber der anderen exklusiv ist.

**17.** Anlage nach Anspruch 15, **dadurch gekennzeichnet, dass** die Auswähl- und Freigabeeinrichtungen (SEL) eine Tastatur oder dergleichen (CLA) zum Auswählen der Bewegungsart (MOD) des Fahrzeugs aufweisen.

**18.** Anlage nach Anspruch 15, **dadurch gekennzeichnet, dass** die Auswähl- und Freigabeeinrichtungen (SEL) einen Handgriff (JOY) für die Auswahl und Freigabe gewisser Fahrzeugführer-Einstellwerte (VLOP, LOP, TJOP, SGOP) und einen Handhebel (MAN) aufweisen, der der Auswahl und Freigabe des Fahrzeugführer-Einstellwertes zugeordnet ist, der sich auf die Reiselängsgeschwindigkeit des Fahrzeugs (VOP) bezieht.

**19.** Anlage nach den Ansprüchen 15 und 18, **dadurch gekennzeichnet, dass** die in der Bewegungsart nach Kurvensegment (MOD) der Handgriff (JOY) Einrichtungen aufweist, die dazu eingerichtet sind, auf dem angezeigten Bild ein Fahrzeugführer-Kurvensegment (SGOP) variabler Länge zu bezeichnen, die erste (EX1) und zweite (EX2) bewegliche Enden aufweisen, wobei das bewegliche Anfangsende (EX1), das mit einem festen Bildpunkt (PF) verbunden ist, einem gewählten festen Punkt am Fahrzeug entspricht, und das entfernte Ende (WX2) den Punkt der Umgebung bestimmt, wo das Fahrzeug hinfahren und anhalten soll.

20. Anlage nach Anspruch 19, **dadurch gekennzeichnet, dass** die Bewegungsart nach Kurvensegment (MOD) in Zuordnung zur Auswahl und Freigabe eines Fahrzeugführer-Einstellwerts, der sich auf die Reiselängsgeschwindigkeit des Fahrzeugs (VOP) bezieht, die folgenden Schritte umfasst.

-i) beim Fahrzeugführer das Auswählen und Freigeben auf dem angezeigten Bild eines Fahrzeugführer-Segments von gewählter Länge und Richtung (SGOP) und das Übertragen des so ausgewählten und freigegebenen Fahrzeugführer-Segments (SGOP) zu den Fahrzeugsteuereinrichtungen (COMV), und

-ii) bei den Fahrzeugsteuereinrichtungen (COMV) das Berechnen in gewählter Folge der Werte der unterschiedlichen ersten und zweiten Bezugseinstellwerte (CREF1 und CREF2) in Abhängigkeit von den so empfangenen Fahrzeugführer-Einstellwerten (SGOP und VOP), und das Bestimmen der ersten und zweiten Stellgliedeinstellwerte (CACT1 und CACT2) in Abhängigkeit von den so berechneten ersten und zweiten Bezugseinstellwerten (CREF1 und CREF2).

21. Anlage nach Anspruch 20, **dadurch gekennzeichnet, dass** der Handgriff dazu eingerichtet ist, von dem Fahrzeugführer in einer y-Achse senkrecht zur Längsbewegungsachse des Fahrzeugs verstellt zu werden, um das hintere Ende (EX2) des Fahrzeugführersegments (SGOP) in der y-Achse zu verstellen, wobei das Fahrzeugführer-Segment (SGOP) parallel zur Längsachse des Fahrzeugs ist.

22. Anlage nach Anspruch 20 oder nach Anspruch 21, **dadurch gekennzeichnet, dass** der Handgriff dazu eingerichtet ist, vom Fahrzeugführer in einer x-Achse parallel zur Längsbewegungsachse des Fahrzeugs verstellt zu werden, um das hintere Ende (EX2) des Fahrzeugführer-Segments (SGOP) in der x-Achse zu verstellen, wobei das Fahrzeugführer-Segment (SGOP) parallel zur Längsachse des Fahrzeugs ist.

23. Anlage nach einem der Ansprüche 20 bis 22, **dadurch gekennzeichnet, dass** der Handgriff dazu eingerichtet ist, vom Fahrzeugführer in einer z-Achse gedreht zu werden, die senkrecht zur Längsbewegungsachse des Fahrzeugs verläuft, um dem Anfangsende (EX1) und dem hinteren Ende (EX2) des Fahrzeugführersegments (SGOP) gegenüber der z-Achse eine Krümmung zu verleihen.

24. Anlage nach Anspruch 20, **dadurch gekennzeichnet, dass** der Schritt i) weiterhin den Schritt umfasst, der darin besteht, einen Fahrzeugführer-Spielraum zu bestimmen, der von dem Fahrzeugführer dem Fahrzeug bei der Steuerung nach dem so freigegebenen Fahrzeugführersegment (SGOP) zugewiesen wird, und dass der Schritt ii) darin besteht, diesen Fahrzeugführer-Spielraum bei der Steuerung des Fahrzeugs zu berücksichtigen.

25. Anlage nach den Ansprüchen 15 und 18, **dadurch gekennzeichnet, dass** in der Bewegungsart nach Kurvengeschwindigkeitssteuerumg (MOD4) in Zuordnung mit der Auswahl und Freigabe eines Fahrzeugführer-Einstellwerts bezüglich der Reiselängsgeschwindigkeit des Fahrzeugs (VOP) der Handgriff dazu eingerichtet ist, vom Fahrzeugführer in einer y-Achse senkrecht zur Längsbewegungsachse des Fahrzeugs verstellt zu werden, um einen Fahrzeugführer-Einstellwert anzulegen, der sich auf die Kurvengeschwindigkeit des Fahrzeugs (VLOP) in einem ersten Kurvengeschwindigkeitsbereich (PG1) bezieht, hingegen der Handgriff dazu eingerichtet ist, vom Fahrzeugführer gegenüber einer z-Achse senkrecht zur Längsbewegungsachse des Fahrzeugs gedreht zu werden, um einen Fahrzeugführer-Einstellwert anzulegen, der sich auf die Kurvengeschwindigkeit (VLOP) in einem zweiten Geschwindigkeitsbereich (PG2) bezieht, der sich vom ersten Bereich (PG1) unterscheidet.

26. Anlage nach den Ansprüchen 15 und 18, **dadurch gekennzeichnet, dass** die Bewegungsart nach Kurvensteuerung (MOD3) in Zusammenhang mit der Auswahl und Freigabe eines Fahrzeugführer-Einstellwerts, der sich auf die Reiselängsgeschwindigkeit (VOP) des Fahrzeugs bezieht, die folgenden Schritte umfasst:

- 1) Vorsehen einer Achse auf einem angezeigten Bild, die einen virtuellen Horizont für das Fahrzeug in der Umgebung bildet, in der es sich bewegt,

- 2) Vorsehen einer ersten Markierung (ID1) auf dem Horizont, die dazu eingerichtet ist, sich längs des Horizontes zu verstellen und die laufende Kurvenfahrt (LC) des Fahrzeugs auf dem Horizont anzuzeigen,

- 3) Vorsehen einer zweiten Markierung (ID2) auf dem Horizont, die dazu eingerichtet ist, sich längs des Horizontes zu verstellen und auf Reflex die laufende Position des Handgriffs (JOY) anzuzeigen,

- 4) Vorsehen einer dritten Markierung (ID3) auf dem Horizont, die dazu eingerichtet ist, sich längs des Horizonts zu verstellen und den Fahrzeugführer-Einstellwert, der sich auf die Kurvenfahrt des Fahrzeugs (LOP) bezieht, anzuzeigen, und

- 5) mit Hilfe des Handgriffs (JOY) Auswählen und Freigeben des Fahrzeugführer-Einstellwerts, der sich auf die Kurvenfahrt (LOP) bezieht, mit Hilfe der Position der ersten und zweiten Markierungen (ID1 und ID2).

27. Anlage nach den Ansprüchen 25 und 26, **dadurch gekennzeichnet, dass** der Handgriff (JOY) Einrichtungen aufweist, die es ermöglichen bei der Bewegung des Fahrzeugs von der Bewegungsart nach Kurvengeschwindigkeitssteuerung (MOD) in die Bewegungsart nach Kurvensteuerung (MOD3) überzugehen, und umgekehrt.

28. Anlage nach den Ansprüchen 15 und 18, **dadurch gekennzeichnet, dass** in der Bewegungsart nach Zielpunkten (MOD1) der Handgriff (JOY) Einrichtungen aufweist, die dazu eingerichtet sind, auf dem angezeigten Bild wenigstens einen Punkt zu bezeichnen, der den Punkt der Umgebung bezeichnet, wo das Fahrzeug hinfahren und anhalten soll.

29. Anlage nach Anspruch 16, **dadurch gekennzeichnet, dass** die Bewegungsart nach Zielpunkten (MOD3) in Zuordnung mit der Freigabe eines Fahrzeugführer-Einstellwerts, der sich auf die Reiselängsgeschwindigkeit (VOP) bezieht, die folgenden Schritte umfasst:

in dem angezeigten Bild das Bezeichnen mehrerer Zielpunkte, die eine Fahrzeugführer-Bahn (TJOP) bilden, wobei das Fahrzeug zum letzten Punkt der Fahrzeugführer-Bahn fahren und dort anhalten muss

- Freigeben der Gesamtheit oder eines Teils der so bezeichneten Fahrzeugführer-Bahn (TJOP),

bei den Fahrzeugsteuereinrichtungen (COMV) das Erarbeiten, in gewählter Folge, der verschiedenen ersten und zweiten Bezugseinstellwerte (CREF1 und CREF2) in Abhängigkeit von der so freigegebenen Fahrzeugführer-Bahn, dieser Fahrzeugführer-Bahn (TJOP) und der laufenden Position des Fahrzeugs.

30. Anlage nach Anspruch 15, **dadurch gekennzeichnet, dass** die Bewegungsart nach Zielpunkten weiterhin ein autonomes Fahrzeugverhalten vom Schleudertyp enthält, das automatisch oder in Abhängigkeit von einem Fahrzeugführerbefehl ausgeführt wird, um gegebenenfalls einem Hindernis auszuweichen.

31. Anlage nach Anspruch 20, **dadurch gekennzeichnet, dass** das autonome Verhalten auf automatisches Schleudern die folgenden Schritte umfasst:

- Vorsehen von Erfassungseinrichtungen, die dazu eingerichtet sind, ein Hindernis auf der Fahrzeugführer-Bahn (TJOP) des Fahrzeugs zu erfassen,

- Ausführen eines Ausweichmanövers gegenüber der Fahrzeugführer-Bahn des Fahrzeugs, um dem so erfassten Hindernis auszuweichen, wobei der Fahrzeugführer-Spielraum berücksichtigt wird, das Ausweichen mit einer Längsgeschwindigkeit ausgeführt wird, die mit den Eigenschaften des Fahrzeugs und/oder der Umgebung, in der es sich bewegt, verträglich ist,

- Aufrechterhalten der Ausweichmanövers bis zum Passieren des Hindernisses, und

- Rückführen des Fahrzeugs auf die Fahrzeugführer-Bahn (TJOP).

32. Anlage nach Anspruch 30, **dadurch gekennzeichnet, dass** das autonome Verhalten auf vom Fahrer hervorgerufenes Schleudern die folgenden Schritte umfasst:

- auf dem angezeigten Bild durch den Fahrzeugführer in Ansprechen auf ein gewähltes Ereignis das Bestimmen eines Fahrzeugführer-Ausweichmanövers gegenüber der Fahrzeugführer-Bahn (TJOP),

- die Erstellung unterschiedlicher erster und zweiter Bezugseinstellwerte (CREF1 und CREF2) in gewählter Folge, wobei dieses Fahrzeugführer-Ausweichmanöver und die laufende Position des Fahrzeugs gegenüber dieser Fahrzeugführer-Bahn (TJOP) in Betracht gezogen wird.

33. Anlage nach Anspruch 13, **dadurch gekennzeichnet, dass** die Sende-/Empfangseinrichtungen der Station und des Fahrzeugs miteinander in einer geeigneten Übertragungstechnologie miteinander kommunizieren, die aus der Gruppe ausgewählt ist, die von Funkfrequenztechnologie, Faseroptiktechnologie oder Drahtübertragungstechnologie und dergleichen gebildet ist.

**34.** Anlage nach Anspruch 14, **dadurch gekennzeichnet, dass** bei einem gewissen Fahrzeugführer-Einstellwert (VOP) einer gewissen Bewegungsart (MOD3, MOD4) eine Gültigkeitsdistanz zugeordnet ist, die der räumlichen Gültigkeit des genannten Fahrzeugführer-Einstellwerts entspricht, und das im Falle des Fehlens wenigstens eines neuen Fahrzeugführer-Einstellwerts am Streckenende der Gültigkeitsdistanz die Fahrzeugsteuereinrichtungen (COMV) das Anhalten des Fahrzeugs bis zum Empfang wenigstens eines neuen Fahrzeugführereinstellwerts auslösen.

**35.** Steuerverfahren für ein Fahrzeug, das mit dem System nach einem der Ansprüche 1 bis 11 ausgeführt wird.

**36.** Verfahren zum Führen eines Fahrzeugs, das mit einer Anlage nach einem der Ansprüche 12 bis 34 ausgeführt wird.

FIG.1

FIG.2

CALCUL VITESSE
MAX ADMISSIBLE
MAX 1

ADAPTATION
VITESSE EN
COURS?

OUI

NON

CREF1 $\overset{?}{<}$ MAX 1

CREF1 $\overset{?}{<}$ MAX1 −
HYST1

APPLICATION
CONSIGNE
POSSIBLE?

FIN
ADAPTATION
POSSIBLE?

NON

OUI

OUI

NON

ADAPTATION
EN COURS

FIN
ADAPTATION
EN COURS

PRISE EN
COMPTE
VITESSE MAX
ADMISSIBLE
EN CONSIGNE

PRISE EN
COMPTE
CONSIGNE
DE VITESSE

CACT1 =
(CREF1, MAX1, OLDACT1)
OLDACT1=CACT1

PRISE EN
COMPTE
CONSIGNE
VITESSE MAX
ADMISSIBLE

CACT1=CREF1

CACT1 = MAX1
OLDACT1=CACT1

ASSERVIR LA
VITESSE

CACT 1

FIG.3

FIG.4

CONSIGNE/ROTATION VOLANT

FIG.5A

CONSIGNE/VITESSE REALISEE

FIG.5C

ACCELERATION TRANSVERSALE

FIG.5B

ACCELERATION LONGITUDINALE

FIG.5D

FIG.15

FIG.6A

FIG.6B

FIG.14

FIG.7A

FIG.7B

FIG.8A

FIG.8B

FIG.9A

FIG.9B

FIG. 10

FIG.11

FIG. 12

FIG. 13

FIG.16

FIG.17